# EUROPÄISCHE PATENTSCHRIFT

(11) **EP 2 076 357 B1**
(45) Veröffentlichungstag und Bekanntmachung des Hinweises auf die Patenterteilung: **31.08.2011**
(21) Anmeldenummer: 07803210.9
(22) Anmeldetag: 04.09.2007
(51) Int. Cl.: B23Q 17/24, B23Q 11/00, B23D 59/00, F16P 3/14, B27G 19/04, B27G 19/02

(54) **WERKZEUGMASCHINENÜBERWACHUNGSVORRICHTUNG**
MACHINE TOOL MONITORING DEVICE
DISPOSITIF DE SURVEILLANCE DE MACHINE-OUTIL

(30) Priorität: 04.09.2006 DE 102006041755; 30.08.2007 DE 102007041097
(43) Veröffentlichungstag der Anmeldung: 08.07.2009
(73) Patentinhaber: Robert Bosch GmbH, 70442 Stuttgart (DE)
(72) Erfinder: MAHLER, Michael, 70771 Leinfelden-Echterdingen (DE); KRAPF, Reiner, 72770 Reutlingen (DE); BRAUN, Heiko, 70771 Leinfelden-Echterdingen (DE); HEES, Alexander, Werner, 74321 Bietigheim-Bissingen (DE); POLLAUF, Philipp, 71034 Boeblingen (DE)
(86) Internationale Anmeldenummer: PCT/EP2007/059246
(87) Internationale Veröffentlichungsnummer: WO 2008/028911

(56) Entgegenhaltungen:
- EP-A- 1 061 487
- EP-A- 1 422 022
- EP-A- 1 514 656
- US-A- 5 436 613

## Beschreibung

### Stand der Technik

Die Erfindung geht aus von einer Werkzeugmaschinenüberwachungsvorrichtung nach dem Oberbegriff des Anspruchs 1.

Eine Werkzeugmaschinenüberwachungsvorrichtung zum Überwachen eines Bearbeitungsprozesses bei einer Tisch-Kreissäge ist beispielsweise aus der EP 1 422 022 A1 bekannt. Hierzu weist die Werkzeugmaschinenüberwachungsvorrichtung eine Sensoreinheit mit einem ersten Radar zum Übertragen von Funkwellen im GHz-Bereich auf, welche in der Nähe eines Sägeblatts angeordnet ist. Die Sensoreinheit der EP 1 422 022 A1 bestimmt die Annäherungsgeschwindigkeit von Objekten in Richtung auf das Schneidwerkzeug der Maschine. Falls die Annäherungsgeschwindigkeit einen Grenzwert überschreitet wird eine Sicherheitsabschaltung des Gerätes vorgenommen. Des weiteren ist bekannt, ein Annähern eines Körperteils an ein Sägeblatt durch Überwachung des Frequenzspektrums eines reflektierten Radarsignals Signals zu detektieren.

### Vorteile der Erfindung

Die Erfindung geht aus von einer Werkzeugmaschinenüberwachungsvorrichtung mit einer Erkennungseinheit zur Erkennung einer Anwendungssituation bei einer Werkzeugmaschine. Die Anwendungssituation kann insbesondere ein nicht planmäßiges bzw. unvorhergesehenes Verhalten eines Werkstückes umfassen, wie beispielsweise das "Verspringen" des Werkstückes während der Bearbeitung. Aufgrund eines sogenannten "Kick-Backs" kann es dabei zu Verletzungen kommen.

Es wird vorgeschlagen, dass die Erkennungseinheit dazu vorgesehen ist, eine Anwendungssituation anhand wenigstens einer Abstandskenngröße zu erkennen. Dadurch kann eine sichere, auf gängigen Erfassungsmethoden und Auswerteverfahren basierende Werkzeugüberwachungsvorrichtung erreicht werden. Unter einer "Abstandskenngröße" kann in diesem Zusammenhang insbesondere eine Kenngröße verstanden werden, mittels welcher ein Abstand ermittelbar ist. Die Abstandskenngröße wird vorzugsweise mittels eines Erfassungssignals, wie z.B. eines elektromagnetischen Signals, insbesondere eines Lichtsignals, oder eines Ultraschallsignals, erfasst. Dabei kann die Abstandskenngröße eine Laufzeit, eine Phasenlage, eine Frequenz des Erfassungssignals oder eine durch ein Triangulationsverfahren erfasste Kenngröße usw. sein. Diese können z.B. nach einem Empfangen des Erfassungssignals in eine elektrische Abstandskenngröße, wie z.B. in eine elektrische Spannung, in einen elektrischen Strom, in eine Ladung usw., umgewandelt werden. Die Abstandskenngröße kann ferner zur Erkennung der Anwendungssituation ausgewertet werden, ohne dass eine quantitative Bestimmung des entsprechenden Abstands erfolgt. Unter einer "Erkennung" einer Anwendungssituation kann in diesem Zusammenhang insbesondere das Feststellen des Vorhandenseins einer bestimmten Situation bei einem Anwendungsprozess der Werkzeugmaschine verstanden werden. Der Anwendungsprozess der Werkzeugmaschine ist dabei insbesondere nicht beschränkt auf die bestimmungsgemäße Nutzung der Werkzeugmaschine. Auch eine unsachgemäße Nutzung der Werkzeugmaschine und insbesondere eine Nutzung ohne ein zu bearbeitendes Werkstück ist hierbei als Anwendungssituation bei der Werkzeugmaschine zu verstehen. Dabei kann das Feststellen des Vorhandenseins einer bestimmten Situation vorteilhafterweise zur Einleitung von Sicherheitsmaßnahmen dienen.

Die erfindungsgemäße Werkzeugmaschinenüberwachungsvorrichtung eignet sich insbesondere für Werkzeugmaschinen, bei welchen ein Änwendungsprozess mittels einer manuellen Bedienung, wie z.B. durch die Handhabung eines Werkstücks bei dessen Bearbeitung, durchgeführt wird. Es kann insbesondere eine hohe Sicherheit bei solchen Werkstückbearbeitungsprozessen erreicht werden, in denen eine Gefahr besteht, dass ein Bediener in Kontakt mit einem bearbeitenden Werkzeug, wie z.B. einem schneidenden Werkzeug, kommt. Hierzu weist die Erkennungseinheit vorteilhafterweise zumindest einen Überwachungsbereich auf, in welchem vorzugsweise die Abstandskenngröße erfasst wird, welcher in einem Anbringbereich der Werkzeugmaschine zum Anbringen eines Werkstücks ans Werkzeug angeordnet ist. Der Anbringbereich weist vorzugsweise ein Führungsmittel auf, das zur Führung des Werkstücks durch den Bediener vorgesehen ist, wie z.B. eine Werkzeugmaschinenbearbeitungsfläche zum Platzieren, insbesondere zum Auflegen eines zu bearbeitenden Werkstücks.

Zur Auswertung der erfassten Abstandskenngröße, insbesondere zur Bestimmung der Anwendungssituation anhand der Abstandskenngröße, weist die Erkennungseinheit vorzugsweise eine Recheneinheit auf, die z.B. als Mikroprozessor und Mikrokontroller ausgebildet ist.

Es wird außerdem vorgeschlagen, dass die Erkennungseinheit dazu vorgesehen ist, die Anwendungssituation anhand eines Satzes von Abstandskenngrößen zu erkennen, wodurch eine besonders präzise und zuverlässige Erkennung einer Anwendungssituation erreicht werden kann. Es kann eine hohe Anzahl an möglichen Anwendungssituationen einfach durch einen Vergleich von mehreren Abstandskenngrößen erkannt werden. Besonders vorteilhaft kann eine Abstandskenngröße zum Bestätigen oder zum Entkräften einer mit Hilfe einer weiteren Abstandskenngröße bestimmten Kann-Situation dienen. Die zur Erkennung dienenden Abstandskenngrößen können zu einem gegebenen Zeitpunkt verschiedenen Erfassungsbereichen entsprechen und/oder sie kennen über ein Zeitintervall verteilt sein.

Die Erkennungseinheit weist vorzugsweise ein Sensormittel auf, welches zur Erfassung einer oder mehrerer Abstandskenngießen vorgesehen ist.

In einer bevorzugten Ausbildung der Erfindung wird vorgeschlagen dass die Erkennungseinheit zumindest zwei Sensormittel zur Erfassung zumindest einer Abstandskenngröße aufweist, wodurch eine Überwachung großer Räume erreicht werden kann. Vorzugsweise weisen die Sensormittel jeweils ein Blickfeld bzw. ein Erfassungsfeld auf, welches auf eine Werkzeugmaschinenbearbeitungsfläche zum Platzieren eines zu bearbeitenden Werkstücks gerichtet ist.

Um eine besonders genaue und sichere Erkennung einer Anwendungssituation erreichen zu können, wird insbesondere vorgeschlagen, dass die Erkennungseinheit zumindest drei Sensormittel zur Erfassung einer Abstandskenngröße aufweist.

In einer vorteilhaften Weiterbildung der Erfindung wird vorgeschlagen, dass die Erkennungseinheit zumindest zwei Sensormittel zur Erfassung zumindest einer Abstandskenngröße aufweist, wobei von den Sensormitteln festgelegte Überwachungsbereiche entlang einer Beförderungsrichtung der Werkzeugmaschine angeordnet sind, wodurch eine relative Bewegung zwischen einem sich in Bearbeitung befindenden Werkzeug und der Werkzeugmaschine konstruktiv einfach überwacht werden kann. Unter einer "Beförderungsrichtung der Werkzeugmaschine" soll in diesem Zusammenhang insbesondere eine durch den Aufbau der Werkzeugmaschine festgelegte vorschriftsgemäße Bewegungsrichtung, in welche ein sich bei einer vorschriftsgemäßen Anwendung der Werkzeugmaschine in Bearbeitung befindendes Werkstück von einem Bediener relativ zu einem stationären Bauteil der Werkzeugmaschine befördert wird, und/oder eine Bewegungsrichtung, in welche bei einer vorschriftsgemäßen Anwendung der Werkzeugmaschine diese relativ zu einem stationären, sich in Bearbeitung befindenden Werkstück von einem Bediener befördert wird, verstanden werden. In der ersten Alternative entspricht die Beförderungsrichtung einer Werkzeugbeförderungsrichtung, während sie in der zweiten Alternative einer Werkzeugmaschinenbeförderungsrichtung entspricht. Unter einer "stationären" Einheit soll insbesondere eine relativ zum Boden feste Einheit verstanden werden. Die Beförderungsrichtung kann insbesondere durch eine bestimmte Ausrichtung des Werkzeugs, insbesondere die Ausrichtung einer Schneidkante relativ zu einem Werkzeugmaschinengehäuse festgelegt sein. Zwei Überwachungsbereiche sind "entlang" der Beförderungsrichtung angeordnet, wenn sie relativ zueinander derart angeordnet sind, dass ein Geradesegment, das die Mittelpunkte der Überwachungsbereiche verbindet, einen Winkel von maximal 30°, vorteilhaft maximal 15° und bevorzugt maximal 5° mit der Beförderungsrichtung bildet. Besonders bevorzugt sind die Überwachungsbereiche in der Beförderungsrichtung hintereinander angeordnet, wobei es zumindest eine parallel zur Beförderungsrichtung ausgerichtete Gerade gibt, die die Überwachungsbereiche schneidet.

Ferner wird vorgeschlagen, dass die Erkennungseinheit zumindest zwei Sensormittel zur Erfassung zumindest einer Abstandskenngröße aufweist, die beiderseits einer Trennebene der Werkzeugmaschine angeordnet sind, wodurch eine Erkennung mit einer hohen Genauigkeit und Zuverlässigkeit erreicht werden kann. Insbesondere kann hiermit das Herunterfallen eines getrennten Teils eines bearbeiteten Werkstücks von einer Gefahrsituation vorteilhaft unterschieden werden. Unter einer "Trennebene der Werkzeugmaschine" soll insbesondere eine Ebene verstanden werden, in welcher eine Funktionskante, wie z.B. eine Schneidkante, eines zu einer Bewegung angetriebenen Werkzeugs eine Bewegung zum Trennen eines Werkstücks, wie z.B. eine Rotationsbewegung oder eine Hubbewegung, ausführt.

Ein besonders einfaches Auswertungsverfahren kann erreicht werden, wenn die Erkennungseinheit dazu vorgesehen ist, die Anwendungssituation anhand einer Differenz zwischen Abstandskenngrößen zu erkennen. Dabei kann eine Differenz zwischen Abstandskenngrößen zu einem Zeitpunkt und/oder zwischen Abstandskenngrößen zu verschiedenen Zeitpunkten zur Erkennung der Anwendungssituation dienen.

In einer vorteilhaften Ausführungsvariante wird vorgeschlagen, dass die Erkennungseinheit dazu vorgesehen ist, die Anwendungssituation anhand einer zeitlichen Änderung einer Abstandskenngröße zu erkennen. Dadurch kann eine schnelle Erkennung der Anwendungssituation erreicht werden. Dies kann besonders einfach erreicht werden, wenn die Erkennungseinheit darauf abgestimmt ist, Änderungen mit einer hohen Änderungsrate, wie z.B. sprungartige Übergänge oder Diskontinuitäten im zeitlichen Verlauf der Abstandskenngröße, zu erfassen und/oder aufzunehmen. Außerdem kann die Erkennungseinheit zur Erkennung von vorgegebenen Mustern im Zeitverlauf der Abstandskenngröße vorgesehen sein.

In diesem Zusammenhang wird vorgeschlagen, dass die Erkennungseinheit dazu vorgesehen ist, bei einer zeitlichen Variation von zumindest einer Abstandskenngröße den Änderungswert der Abstandskenngröße einzustufen, wodurch eine besonders schnelle Erkennung einer Anwendungssituation erreicht werden kann. Unter einem "Einstufen" einer erfassten Kenngröße soll insbesondere das Zuordnen der Kenngröße zu einem vordefinierten Intervall verstanden werden. Unter dem "Änderungswert" der Abstandskenngröße soll insbesondere die erste Ableitung der Abstandskenngröße bezüglich der Zeit verstanden werden.

Außerdem wird vorgeschlagen, dass die Erkennungseinheit dazu vorgesehen ist, eine unvorhergesehene Bewegung eines Werkstücks zu erkennen, wodurch eine besonders hohe Sicherheit in der Anwendung der Werkzeugmaschine erreicht werden kann. Unter einer "unvorhergesehenen Bewegung" eines Werkstücks soll in diesem Zusammenhang insbesondere eine von einem Bediener unbeabsichtigte bzw. unkontrollierte Bewegung des Werkstücks relativ zu einem Werkzeugmaschinenbauteil verstanden werden. Die unvorhergesehene Bewegung des Werkstücks relativ zum Werkzeugmaschinenbauteil kann z.B. bei einer Beförderung des Werkstücks durch einen Bediener relativ zum stationären Werkzeugmaschinenbauteil stattfinden oder sie kann bei einer Beförderung des Werkzeugmaschinenbauteils durch einen Bediener relativ zum stationären Werkstück stattfinden.

Insbesondere wird vorgeschlagen, dass die Erkennungseinheit dazu vorgesehen ist, anhand von zumindest einer erfassten Abstandskenngröße eine Rückbewegung eines Werkstücks entgegen einer Werkstückbeförderungsrichtung zu erkennen, wodurch Schutzmaßnahmen bei einem Rückschlagen eines Werkstücks relativ zu einem Bediener, welches durch Kräfte, die zwischen einem angetriebenen Werkzeug und dem Werkstück entstehen, hervorgerufen sind, schnell eingeleitet werden können. Unter einer "Rückbewegung entgegen einer Werkstückbeförderungsrichtung" soll eine Bewegung des Werkstücks relativ zu einem Werkzeugmaschinenbauteil verstanden werden, die zumindest eine Komponente aufweist, welche entgegen einer vorschriftsgemäßen Beförderungsrichtung des Werkstücks relativ zur Werkzeugmaschine ausgerichtet ist. Hiermit kann ein hoher Schutz insbesondere bei Werkzeugmaschinen erreicht werden, bei welchen mechanische Schutzvorrichtungen, wie z.B. ein Spaltkeil oder eine Schutzhaube, nicht vorhanden oder zu Gunsten eines einfachen Arbeitens von einem Endbediener abmontierbar sind.

Ferner wird vorgeschlagen, dass die Erkennungseinheit dazu vorgesehen ist, anhand von zumindest einer erfassten Abstandskenngröße eine Rückbewegung der Werkzeugmaschine entgegen einer Werkzeugmaschinenbeförderungsrichtung zu erkennen, wodurch Schutzmaßnahmen bei einem Rückschlagen einer Werkzeugmaschine in Richtung auf einen Bediener schnell eingeleitet werden können. Unter einer "Rückbewegung entgegen einer Werkzeugmaschinenbeförderungsrichtung" soll eine Bewegung der Werkzeugmaschine relativ zu einem stationären Werkstück verstanden werden, die zumindest eine Komponente aufweist, welche entgegen einer vorschriftsgemäßen Beförderungsrichtung der Werkzeugmaschine relativ zum Werkstück ausgerichtet ist.

In einer vorteilhaften Weiterbildung der Erfindung wird vorgeschlagen, dass die Erkennungseinheit dazu vorgesehen ist, anhand von zumindest einer erfassten Abstandskenngröße eine Abhebbewegung eines Werkstücks und/oder eines Werkzeugmaschinenbauteils relativ zu einer Werkstückbearbeitungsebene zu erkennen, wodurch Schutzmaßnahmen zur Verhinderung von Verletzungen rechtzeitig eingeleitet werden können. Unter einer "Werkstückbearbeitungsebene" soll insbesondere eine Ebene verstanden werden, entlang welcher sich das Werkstück bei einem vorschriftsgemäßen Bearbeiten des Werkstücks bewegt. Bei einer stationären Werkzeugmaschine ist die Werkstückbearbeitungsebene vorzugsweise von einer Werkzeugmaschinenbearbeitungsfläche gebildet, die zum Platzieren des Werkstücks vorgesehen ist. Wird ein zu bearbeitendes Werkstück zur Bearbeitung relativ zum Boden fest eingespannt, entspricht die Werkstückbearbeitungsebene insbesondere der Oberfläche des Werkstücks, entlang welcher die Werkzeugmaschine bewegt wird. Unter einer "Abhebbewegung" relativ zur Werkstückbearbeitungsebene soll insbesondere eine Bewegung verstanden werden, die zumindest eine Komponente aufweist, welche senkrecht zur Werkstückbearbeitungsebene ausgerichtet ist.

Vorteilhafterweise weist die Erkennungseinheit zumindest ein Sensormittel zur Erfassung zumindest einer Abstandskenngröße auf, das zu einem ultrabreitbandigen Betrieb vorgesehen ist. Zusätzlich zur Erfassung einer Abstandskenngröße können weitere Kenngrößen zur Erkennung einer Anwendungssituation, wie insbesondere das Vorhandensein von menschlichem Gewebe in einem überwachten Bereich, erfasst bzw. ausgewertet werden, wie z.B. spektrale Kenngrößen eines Empfangssignals. Unter einem für einen Ultrabreitbandbetrieb vorgesehenen Sensormittel soll insbesondere ein Mittel verstanden werden, mittels dessen ein ultrabreitbandiges Signal erzeugt, empfangen und/oder ausgewertet werden kann. Unter einem "ultrabreitbandigen Signal" soll insbesondere ein Signal verstanden werden, welches ein Frequenzspektrum mit einer Mittenfrequenz und einer Frequenzbandbreite von zumindest 500 MHz aufweist. Die Mittenfrequenz ist vorzugsweise im Frequenzbereich von 1 GHz bis 15 GHz gewählt. Das Sensormittel kann alternativ oder zusätzlich als Laserentfernungsmesser, Triangulationssensor, Ultraschallsensor oder Kapazitivsensor usw. ausgebildet sein. Das Sensormittel kann sich ferner oberhalb oder unterhalb einer Bearbeitungsfläche der Werkzeugmaschine, die zum Platzieren, insbesondere zum Auflegen eines zu bearbeitenden Werkstücks dient, angeordnet sein. Es können ferner zumindest zwei Sensormittel vorgesehen sein, die beiderseits der Bearbeitungsfläche angeordnet sind.

Eine hohe Flexibilität in der Gestaltung von Überwachungsfunktionen kann erreicht werden, wenn die Erkennungseinheit zumindest zwei Überwachungsbereiche zum Überwachen eines Anwendungsprozesses der Werkzeugmaschine festlegt. Einem Überwachungsbereich ist vorzugsweise ein Sensormittel oder ein Satz von Sensormitteln zugeordnet. Dabei kann ein Überwachungsbereich z.B. einem Erfassungsbereich eines Sensormittels entsprechen.

Außerdem wird vorgeschlagen, dass den Überwachungsbereichen jeweils ein unterschiedlicher Betriebsmodus der Werkzeugmaschine zugeordnet ist, wodurch eine hohe Flexibilität in der Anwendung der Werkzeugmaschine erzielt werden kann. Hierzu ist die Erkennungseinheit vorzugsweise mit einer Steuereinheit der Werkzeugmaschine verbunden. Beispielsweise können den Betriebsmodi verschiedene Sicherheitsstufen bei einem Betrieb der Werkzeugmaschine entsprechen.

In einer bevorzugten Ausgestaltung der Erfindung wird vorgeschlagen, dass zumindest einem der Überwachungsbereiche ein Warnmodus der Werkzeugmaschine zugeordnet ist. Dadurch können vorteilhaft bei Erkennung einer potentiell gefährlichen Anwendungssituation Vorschutzmaßnahmen eingeleitet werden, bevor ein Bediener sich in einer akuten Gefahr befindet. Beispielsweise kann der Bediener, z.B. durch ein Warnsignal, vor einer möglichen Gefahr gewarnt werden. Dabei ist vorzugsweise einem weiteren Überwachungsbereich ein Sicherheitsmodus zur Sicherheitsabschaltung der Werkzeugmaschine zugeordnet.

In diesem Zusammenhang können ein vorteilhafter Warneffekt und eine hohe Sicherheit erreicht werden, wenn die Erkennungseinheit im Zusammenwirken mit einer Werkzeugmaschinenantriebseinheit zum Antreiben eines Werkzeugs zum Verlangsamen eines Werkzeugantriebs im Warnmodus vorgesehen ist. Hierzu weist die Erkennungseinheit vorzugsweise eine Schnittstelle auf, die zur Kopplung mit einer Steuereinheit zum Steuern der Werkzeugmaschinenantriebseinheit vorgesehen ist. Ferner kann die Erkennungseinheit eine Steuereinheit zum Senden eines Steuersignals an die Werkzeugmaschinenantriebseinheit aufweisen.

Des Weiteren wird vorgeschlagen, dass zumindest einem der Überwachungsbereiche ein Beseitigen eines angetriebenen Werkzeugs aus einem Arbeitsbereich der Werkzeugmaschine zugeordnet ist, wodurch eine potentielle Verletzungsgefahr effektiv beseitigt werden kann. Das "Beseitigen" des angetriebenen Werkzeugs, das vorzugsweise mittels einer mit der Erkennungseinheit in Wirkverbindung stehenden Aktorikeinheit durchgeführt wird, kann insbesondere durch ein Verstellen des angetriebenen Werkzeugs in eine Sicherheitsposition außerhalb des Arbeitsbereichs, wie z.B. mittels eines Versenkens des angetriebenen Werkzeugs unterhalb einer Werkzeugmaschinenbearbeitungsfläche, durch ein Abschalten des Antriebs des Werkzeugs und/oder durch ein Bedecken einer Schneidkante des Werkzeugs verwirklicht werden. Der "Arbeitsbereich" setzt sich vorzugsweise aus Punkten zusammen, die für einen Bediener unter vorschriftsgemäßen Anwendungsbedingungen der Werkzeugmaschine zugänglich sind.

In einer bevorzugten Ausbildung der Erfindung wird vorgeschlagen, dass zumindest einem der Überwachungsbereiche eine Sicherheitsabschaltung der Werkzeugmaschine zugeordnet ist, wodurch eine hohe Bediensicherheit der Werkzeugmaschine erreicht werden kann.

Ferner wird vorgeschlagen, dass die Erkennungseinheit eine Recheneinheit umfasst, die dazu vorgesehen ist, die Anwendungssituation durch eine auf einer unscharfen und/oder neuronalen Logik basierende Auswertung von Abstandskenngrößen zu erkennen. Mit Hilfe einer unscharfen und/oder neuronalen Logik kann von der Recheneinheit eine große und komplexe Informationsmenge schnell ausgewertet werden. Unter einer "unscharfen Logik" kann in diesem Zusammenhang insbesondere eine Logik verstanden werden, die dem Auftreten eines bestimmten Ereignisses einen Wahrscheinlichkeitswert im Intervall zwischen 0 (falsch) und 1 (wahr) zuordnet.

In einer weiteren Ausführungsvariante wird vorgeschlagen, dass die Erkennungseinheit eine Datenbank aufweist, in welcher einem Satz von Abstandskenngrößen eine Anwendungssituation zugeordnet ist, wodurch ein einfacher Erkennungsprozess einer Anwendungssituation erreicht werden kann. Vorteilhafterweise kann die Datenbank durch einen Endbenutzer programmierbar sein.

Außerdem kann eine besonders hohe Sicherheit erreicht werden, wenn die Erkennungseinheit dazu vorgesehen ist, das Vorhandensein eines menschlichen Körperteils in einem Überwachungsbereich anhand wenigstens einer Abstandskenngröße zu erkennen.

Die Sicherheit kann weiter erhöht werden, wenn die Werkzeugmaschinenüberwachungsvorrichtung eine Aktorikeinheit zur Durchführung einer Sicherheitsmaßnahme aufweist, die mit der Erkennungseinheit in Wirkverbindung steht. Diese Aktorikeinheit ist insbesondere dazu vorgesehen, anhand eines Signals der Erkennungseinheit das Vorhandensein eines zu einer Bewegung angetriebenen Werkzeugs in einer Gefahrenzone zu beseitigen und/oder ein Warnsignal an den Bediener auszugeben. Hierbei kann unter dem "Beseitigen" ein Abschalten des Werkzeugantriebs oder das Verstellen des angetriebenen Werkzeugs aus der Gefahrenzone verstanden werden. Die "Gefahrenzone" setzt sich vorzugsweise aus Punkten zusammen, die einen kleinsten Abstand zum angetriebenen Werkzeug von maximal 5 cm, insbesondere maximal 2 cm aufweisen.

Ferner wird ein Verfahren zur Erkennung einer Anwendungssituation bei einem Anwendungsprozess einer Werkzeugmaschine vorgeschlagen, bei dem zur Erkennung der Anwendungssituation wenigstens eine Abstandskenngröße erfasst wird. Dadurch kann ein sicheres Erkennungsverfahren mit gängigen Erfassungsmitteln einfach erreicht werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Kreissäge mit einem Sägetisch, aus wel- chem ein Sägeblatt herausragt, und einer Über- wachungsvorrichtung mit drei Abstandssensoren,
- Fig. 2: die Kreissäge aus Figur 1 mit einer alternati- ven Ausgestaltung der Überwachungsvorrichtung,
- Fig. 3: die Kreissäge aus Figur 1 in einer Ansicht von oben mit einer alternativen Überwachungsvor- richtung, die vier Überwachungsbereiche auf- weist,
- Fig. 4: eine interne Schaltung der Kreissäge in der Ausführung aus Figur 3,
- Fig. 5 und 6: Bearbeitungsprozesse mit der Kreissäge aus Figur 3,
- Fig. 7 und 8: Diagramme zur Erläuterung der Erkennungs- funktion der Überwachungsvorrichtung,
- Fig. 9: eine Datenbank der Überwachungsvorrichtung,
- Fig. 10: den Sägetisch, ein Werkstück und eine auf dem Werkstück aufgelegte Hand,
- Fig. 11: den Verlauf einer Abstandskenngröße in der Si- tuation aus Figur 10,
- Fig. 12: die Kreissäge mit einer alternativen Ausfüh- rung einer Sensoreinheit der Überwachungsvor- richtung beiderseits des Sägeblatts,
- Fig. 13: die Kreissäge bei einer vorschriftsgemäßen Be- arbeitung eines Werkstücks,
- Fig. 14: die Verläufe von Abstandskenngrößen der Sen- soreinheit aus Figur 12 bei der Anwendungssi- tuation aus Figur 13,
- Fig. 15: die Kreissäge bei einem Rückschlag des Werk- stücks,
- Fig. 16: die Verläufe von Abstandskenngrößen bei der Anwendungssituation aus Figur 15,
- Fig. 17: eine Handkreissäge in einer Seitenansicht mit der Sensoreinheit aus Figur 12,
- Fig. 18: die Handkreissäge bei einem Abheben von einem Werkstück,
- Fig. 19: die Verläufe von Abstandskenngrößen bei der Anwendungssituation aus Figur 18 und
- Fig. 20: eine Stichsäge in einer Seitenansicht mit ei- ner alternativen Sensoreinheit.

### Beschreibung der Ausführungsbeispiele

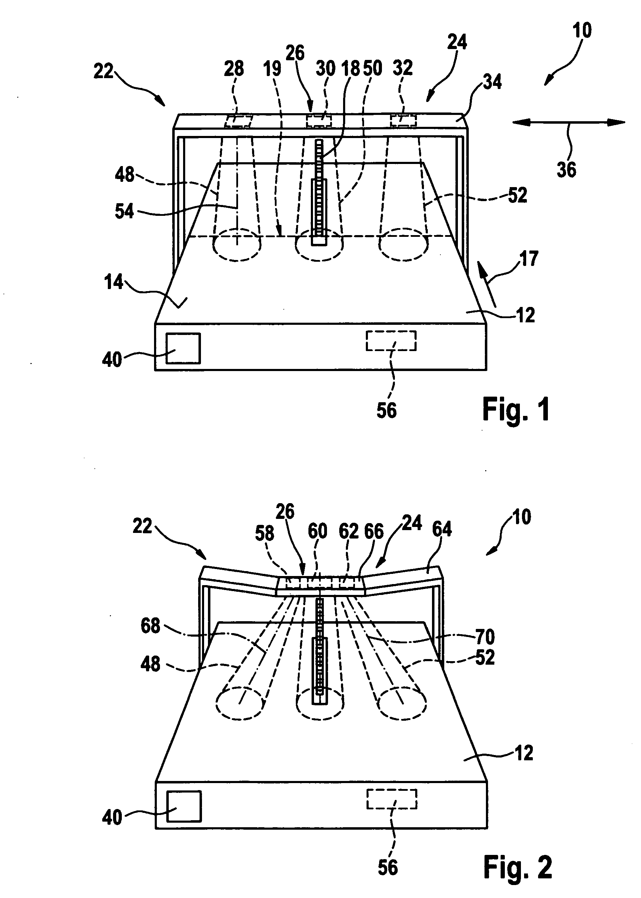

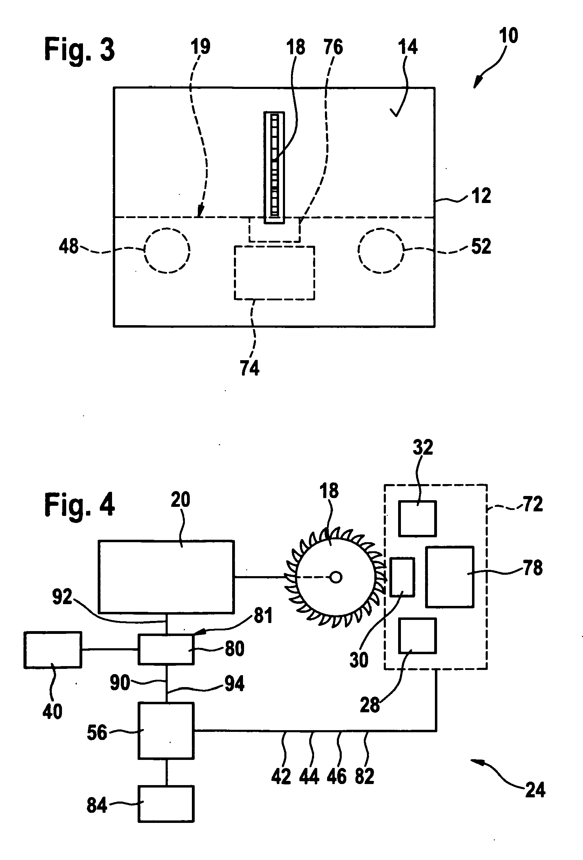

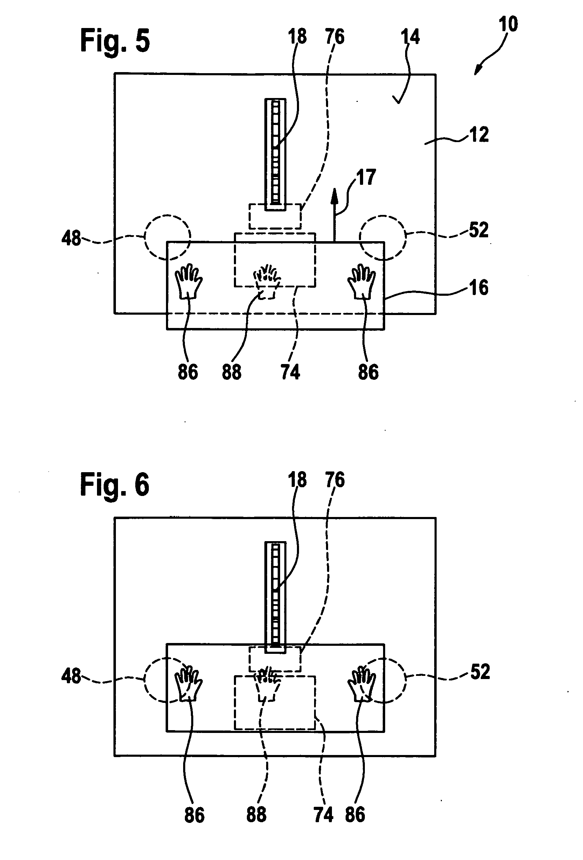

In Figur 1 ist eine als Kreissäge ausgebildete Werkzeugmaschine 10 in einer perspektivischen Ansicht dargestellt. Diese umfasst einen Sägetisch 12 mit einer Bearbeitungsfläche 14, auf welche ein zu bearbeitendes Werkstück 16 (Figur 5) aufgelegt werden kann, ein als Sägeblatt ausgebildetes Werkzeug 18, welches aus dem Sägetisch 12 herausragt und eine als Elektromotor ausgebildete Werkzeugmaschinenantriebseinheit 20 zum Antreiben des Werkzeugs 18 (siehe Figur 4). Bei einem Bearbeiten des Werkstücks 16 durch einen Bediener wird das Werkstück 16 in einer Anbringrichtung 17 gegen das Werkzeug 18 geschoben. Hierzu bildet der Teil der Bearbeitungsfläche 14, welcher in Anbringrichtung 17 vor dem Werkzeug 18 angeordnet ist, einen Anbringbereich 19, auf welchem das Werkstück 16 geführt wird. Die Begrenzung des Anbringbereichs 19 ist in der Figur durch eine gestrichelte Linie dargestellt.

Zur Überwachung von Bearbeitungsprozessen der Werkzeugmaschine 10 ist diese mit einer Werkzeugmaschinenüberwachungsvorrichtung 22 versehen. Die Werkzeugmaschinenüberwachungsvorrichtung 22 weist eine Erkennungseinheit 24 auf, die dazu vorgesehen ist, eine bei einem Bearbeitungsprozess der Werkzeugmaschine 10 auftretende Anwendungssituation zu erkennen. Hierzu umfasst die Erkennungseinheit 24 eine Sensoreinheit 26, die als ein Satz von drei Sensormitteln 28, 30, 32 ausgebildet ist. Die Sensoreinheit 26 ist in einem Trägerelement 34 fixiert, welches sich über die Breite des Sägetischs 12 oberhalb der Bearbeitungsfläche 14 erstreckt. Hierbei sind die Sensormittel 28, 30, 32 entlang einer Sensorachse 36 angeordnet, welche quer zur Anbringrichtung 17 zum Anbringen des Werkstücks 16 zum Werkzeug 18 ausgerichtet ist. Die Werkzeugmaschine 10 weist ferner eine als Lautsprecher ausgebildete Signalausgabeeinheit 40 auf. Eine optische Signalausgabeeinheit ist ebenfalls denkbar.

Die Sensormittel 28, 30, 32 sind jeweils als Abstandssensor ausgebildet. In diesem Ausführungsbeispiel sind die Sensormittel 28, 30, 32 jeweils als Infrarot-Sensor ausgebildet, welcher eine Abstandskenngröße 42, 44, 46 (siehe z.B. Figur 4) mittels eines Triangulationsverfahrens erfasst. Diese Art von Sensoren sowie die Erfassung einer Abstandskenngröße durch Triangulation sind bekannt, so dass diese im Rahmen dieser Beschreibung nicht näher beschrieben werden. Die Sensormittel 28, 30, 32 legen jeweils einen Überwachungsbereich 48, 50, 52 fest, dessen Projektion auf der Bearbeitungsfläche 14 mittels einer gestrichelten Linie schematisch dargestellt ist, innerhalb dessen eine Erfassung der Abstandskenngröße 42, 44 bzw. 46 stattfinden kann. Die Überwachungsbereiche 48, 50, 52 der Erkennungseinheit 24 befinden sich im Anbringbereich 19 der Bearbeitungsfläche 14. Die Abstandskenngrößen 42, 44, 46 entsprechen jeweils einem Abstand zu einem sich im entsprechenden Überwachungsbereich 48, 50 bzw. 52 befindenden Objekt oder, bei freiem Überwachungsbereich, dem Abstand zur Bearbeitungsfläche 14. Die Überwachungsbereiche 48, 50, 52 sind durch die Reichweite der entsprechenden Sensormittel 28, 30, 32 festgelegt. Die Überwachungsbereiche 48, 50, 52 erstrecken sich kegelförmig entlang einer Erfassungsrichtung 54, die senkrecht zur Bearbeitungsfläche 14 des Sägetischs 12 ausgerichtet ist.

Zur Erkennung einer Anwendungssituation anhand der Abstandskenngrößen 42, 44, 46, ist die Erkennungseinheit 24 mit einer Recheneinheit 56 versehen, die als Mikroprozessor ausgebildet ist. Diese ist unterhalb des Sägetischs 12 angeordnet und über Kabelverbindungen mit der Sensoreinheit 26 verbunden. Eine alternative Anordnung der Recheneinheit 56, wie z.B. im Trägerelement 34, ist ebenfalls denkbar.

Eine alternative Ausführung der Werkzeugmaschinenüberwachungsvorrichtung 22 ist in Figur 2 dargestellt. Hierbei ist die sensoreinheit 26 mit drei Sensormitteln 58, 60, 62 in einem alternativen Trägerelement 64 aufgenommen. Dieses ist im hinteren Bereich des Sägetischs 12 abgestützt und weist einen Teilbereich 66 zur Aufnahme der Sensormittel 58, 60, 62 auf, welcher eich über einen Teil der Breite des Sägetischs 12 erstreckt. Durch die Anordnung der Sensormittel 58, 60, 62 in diesem Teilbereich 66 erstrecken sich die Überwachungsbereiche 48, 52 kegelförmig entlang von Erfassungsrichtungen 68, 70, die schräg zur Bearbeitungsfläche 14 ausgerichtet sind. In diesem Ausführungsbeispiel ist die Erkennungseinheit 24 zu einem Ultrabreitbandbetrieb vorgesehen. Hierzu sind die Sensormittel 58, 60, 62 der Sensoreinheit 26 jeweils als UWB-Sensor (Ultra Wide Band oder Ultrabreitband-Sensor) ausgebildet. Diese sind zur Erfassung einer Abstandskenngröße mittels eines als breitbandiges Signal ausgebildeten elektromagnetischen Signals vorgesehen, das eine Mittenfrequenz zwischen 1 GHz und 150 GHz und eine Frequenzbandbreite von mindestens 500 MHz aufweist.

Eine weitere Ausführungsform der Werkzeugmaschinenüberwachungsvorrichtung 22 aus Figur 1 wird anhand von Figur 3 beschrieben, in welcher die Werkzeugmaschine 10 in einer Ansicht von oben dargestellt ist. Dabei ist die Erkennungseinheit 24 mit einer alternativen Sensoreinheit 72 versehen. Der Übersichtlichkeit halber wurde auf die Darstellung des Trägerelements 34 aus Figur 1 und der Sensoreinheit 72 verzichtet. Die Sensoreinheit 72 ist in Figur 4 dargestellt. Es sind die Projektionen von den Überwachungsbereichen 48, 52 und von zwei weiteren Überwachungsbereichen 74, 76 auf der Bearbeitungsfläche 14 dargestellt. Die Überwachungsbereiche 48, 52, 74, 76 sind im Anbringbereich 19 der Bearbeitungsfläche 14 angeordnet. Die Überwachungsbereiche 74, 76 sind in Anbringrichtung 17 vor dem Werkzeug 18 angeordnet, wobei der Überwachungsbereich 76 in Anbringrichtung 17 direkt vor dem Werkzeug 18 angeordnet ist und der Überwachungsbereich 74 sich in Anbringrichtung 17 vor dem Überwachungsbereich 76 befindet. Die Überwachungsbereiche 48, 52 sind seitlich neben den Überwachungsbereichen 74, 76 angeordnet, wobei der Begriff "seitlich" sich auf die Sensorachse 36 senkrecht zur Anbringrichtung 17 bezieht. Die Überwachungsbereiche 48, 76, 52 sind von den Sensormitteln 28, 30, 32 aus Figur 1 festgelegt, während der Überwachungsbereich 74 einem weiteren Sensormittel 78 entspricht, welches in Figur 4 dargestellt ist. Das Sensormittel 78 kann als Triangulationssensor, als UWB-Sensor, oder als weiterer, dem Fachmann als sinnvoll erscheinender Abstandssensor ausgebildet sein.

In Figur 4 ist eine interne Schaltung der Werkzeugmaschine 10 schematisch dargestellt. Es sind das als Sägeblatt ausgebildete Werkzeug 18, die Erkennungseinheit 24, die Werkzeugmaschinenantriebseinheit 20, eine als Steuereinheit 80 zum Steuern der Werkzeugmaschinenantriebseinheit 20 ausgebildete Aktorikeinheit 81 und der Signalausgabeeinheit 40 und diese Signalausgabeeinheit 40 gezeigt. Die Erkennungseinheit 24 weist die Sensoreinheit 72, welche die Sensormittel 28, 30, 32, 78 umfasst, und die Recheneinheit 56 auf. Die Recheneinheit 56 ist zum Empfangen von den Abstandskenngrößen 42, 44, 46 und einer vom Sensormittel 78 erfassten Abstandskenngröße 82 mit der Sensoreinheit 72 verbunden. Die Recheneinheit 56 ist ferner mit der Steuereinheit 80 verbunden. Die Abstandskenngrößen 42, 44, 46, 82 sind in diesem Beispiel als elektrische Spannungen ausgebildet, welche von den Sensormitteln 28, 30, 32, 78 der Sensoreinheit 72 in Abhängigkeit eines Abstands im entsprechenden Überwachungsbereich 48, 76, 52 bzw. 74 ausgegeben werden. Ferner ist die Recheneinheit 56 mit einer Speichereinheit 84 verbunden.

In diesem Beispiel ist die Recheneinheit 56 mit der Steuereinheit 80 mittels einer Kabelverbindung verbunden. In einer alternativen Ausführungsform ist denkbar, dass die Recheneinheit 56 im Trägerelement 34 (siehe Figur 1) angeordnet ist und zur Herstellung einer Datenverbindung mit der Steuereinheit 80 über eine drahtlose Verbindung, wie z.B. über eine Funkverbindung, vorgesehen ist. Dadurch kann ein optionaler Einsatz der Werkzeugmaschinenüberwachungsvorrichtung 22 in Kombination mit der Werkzeugmaschine 10 mit geringem Montageaufwand, insbesondere ohne aufwendige Verkabelung, besonders einfach erreicht werden.

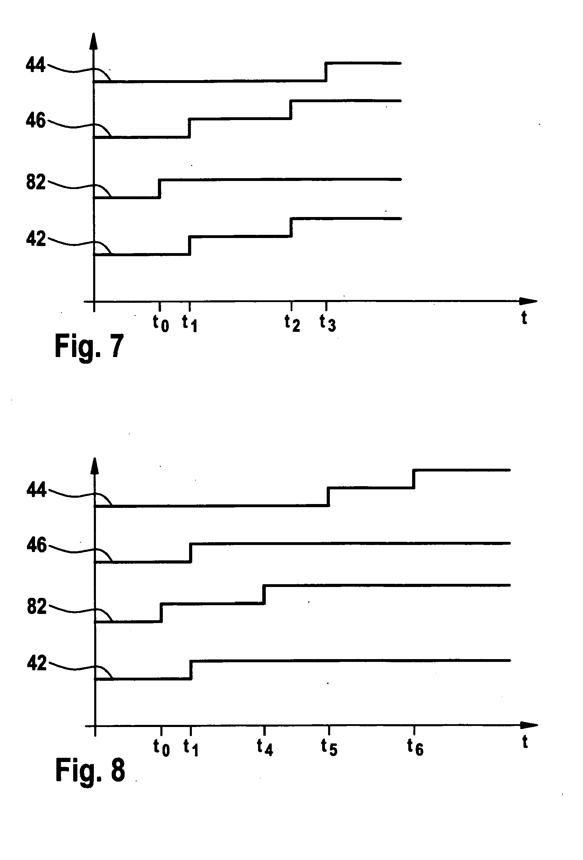

Bearbeitungsprozesse mit der Werkzeugmaschine 10 werden anhand der Figuren 5 und 6 erläutert. Ferner wird zur Erläuterung der Funktionsweise der Werkzeugmaschinenüberwachungsvorrichtung 22 auf die Figuren 7 und 8 verwiesen. Die Figuren 7 und 8 stellen in einem Diagramm die von den Sensormitteln 28, 30, 32, 78 ausgegebenen, als elektrische Spannungen ausgebildeten Abstandskenngrößen 42, 44, 46, 82 als Funktion der Zeit t dar. Der Übersichtlichkeit halber werden die entsprechenden Abstandskenngrößen 42, 44, 46, 82 jeweils in einem separaten Bereich der y-Achse dargestellt. Die Abstandskenngrößen 42, 82, 46 bzw. 44 sind jeweils den Sensormitteln 28, 78, 32 bzw. 30 zugeordnet.

Es wird angenommen, dass ein Bediener die Bearbeitung des als Holzbrett ausgebildeten Werkstücks 16 mittels der Werkzeugmaschine 10 vornimmt. Vor dem Auflegen des Werkstücks 16 auf die Bearbeitungsfläche 14 entsprechen die erfassten Abstandskenngrößen dem gleichen Abstand, und zwar dem Abstand der Sensormittel 28, 78, 32, 30 zur Bearbeitungsfläche 14. Das Werkstück 16 wird auf die Bearbeitungsfläche 14 aufgelegt und von dem Bediener in der Anbringrichtung 17 zum Werkzeug 18 bewegt. Zum Zeitpunkt t₀ gelangt das Werkstück 16 in den Überwachungsbereich 74. Wie in Figur 7 zu sehen ist, weist die Abstandskenngröße 82 einen sprungartigen Übergang auf, welcher der Reduzierung des Abstands um die Dicke des Werkstücks 16 im Überwachungsbereich 74 entspricht. Zum Zeitpunkt t₁ dringt das Werkstück 16 in die Überwachungsbereiche 48 und 52 ein, wobei die Abstandskenngrößen 42, 46 einen sprungartigen Übergang aufweisen. Es wird ferner angenommen, dass sich beim Bewegen des Werkstücks 16 in der Anbringrichtung 17 die Hände des Bedieners an den Rändern des Werkstücks 16 (durchgezogene Handsymbole 86) befinden. Bei einem Weiterbewegen des Werkstücks 16 gelangen die Hände des Bedieners jeweils in einen der Überwachungsbereiche 48, 52 zu einem Zeitpunkt t₂ (Figur 6). Dies wird durch die Sensormittel 28, 32 registriert (siehe Figur 7). Zu einem späteren Zeitpunkt t₃ gelangt das Werkstück 16 in den Überwachungsbereich 76.

Die Recheneinheit 56 ist dazu programmiert, Anwendungssituationen mittels einer logischen Methode zu erkennen. Eine Anwendungssituation wird als Ergebnis einer logischen Abfragekette erreicht. Dabei überwacht die Recheneinheit 56 einerseits Differenzen zwischen den Abstandskenngrößen 42, 82, 46, andererseits registriert die Recheneinheit 56 den zeitlichen Verlauf aller Abstandskenngrößen. Insbesondere wird für jede Abstandskenngröße die Anzahl der sprungartigen Übergänge registriert. Das entsprechende Auswertungsprogramm ist in der Speichereinheit 84 gespeichert.

Zwischen den Zeitpunkten t₁ und t₂ sind alle Differenzen zwischen den Abstandskenngrößen 42, 82, 46 gleich Null. Die Recheneinheit 56 interpretiert dies als eine sichere Anwendungssituation, für welche keine weiteren Maßnahmen notwendig sind. Gelangen die Hände zum Zeitpunkt t₂ in die Überwachungsbereiche 48, 52, wird eine Differenz der Abstandskenngrößen 42, 46 zu der Abstandskenngröße 82 registriert. Dies löst im logischen Erkennungsverfahren einen weiteren Schritt aus, in welchem die jeweiligen Zustände der Abstandskenngrößen sowie deren zeitliche Verläufe herangezogen werden. Die Recheneinheit 56 stellt insbesondere fest, dass zum Zeitpunkt t₂ die Abstandskenngröße 44 sich noch in ihrem Anfangszustand befindet. Dies wird wiederum als eine Anwendungssituation erkannt, für die keine weiteren Maßnahmen notwendig sind.

Zum Zeitpunkt t₃ wird registriert, dass die Abstandskenngröße 44 ihren Wert ändert. Anhand dieser Information untersucht die Recheneinheit 56 die Zustände der weiteren Abstandskenngrößen. Da die Werte dieser Abstandskenngrößen unverändert vorliegen, was dem weiteren Vorhandensein der Hände in den Überwachungsbereichen 48, 52 entspricht, wird dies von der Recheneinheit 56 als eine unkritische Anwendungssituation erkannt.

Es wird nun angenommen, dass der Bediener eine Hand im Mittelbereich des Werkstücks 16 aufgelegt hat. Dies wird anhand des Diagramms in Figur 8 beschrieben. Diese Situation ist in den Figuren 5 und 6 mittels eines gestrichelt dargestellten Handsymbols 88 gezeigt. Das Werkstück 16 dringt wie im vorherigen Beispiel zum Zeitpunkt t₀ in den Überwachungsbereich 74 ein. Zum Zeitpunkt t₄ gelangt die Hand in den Überwachungsbereich 74 (Figur 5), was in einem sprungartigen Übergang der Abstandskenngröße 82 zum Ausdruck kommt. Ferner gelangt das Werkstück 16 in den Überwachungsbereich 76 zum Zeitpunkt t₅. Zum Zeitpunkt t₄ gelangt die Hand in den Überwachungsbereich 74. Dabei entsteht eine Differenz der Abstandskenngröße 82 zu den Abstandskenngrößen 42, 46, was von der Recheneinheit 56 registriert wird. Die Recheneinheit 56 stellt ferner fest, dass eine zweite Diskontinuität der Abstandskenngröße 82 vorliegt. In der logischen Kette der Recheneinheit 56 wird dies als eine Anwendungssituation erkannt, in welcher ein Warnmodus der Werkzeugmaschine 10 einzuschalten ist. Hierzu gibt die Recheneinheit 56 ein Warnsignal 90 auf die Aktorikeinheit 81 (Figur 4), die einerseits die Ausgabe eines akustischen Signals durch die Signalausgabeeinheit 40 bewirkt und andererseits ein Steuersignal 92 an die Werkzeugmaschinenantriebseinheit 20 sendet. Dabei wird z.B. die Drehzahl des Werkzeugs 18 auf einen kleineren Wert eingestellt.

Ignoriert der Bediener diese Warnungen und gelangt seine Hand in den Überwachungsbereich 76 zu einem Zeitpunkt t₆, wird der entsprechende zweite sprungartige Übergang der Abstandskenngröße 44 durch die Recheneinheit 56 registriert, welche diese Anwendungssituation als akute Gefahrensituation erkennt. Hierbei gibt die Recheneinheit 56 ein Stoppsignal 94 auf die Aktorikeinheit 81, welche eine Sicherheitsabschaltung der Werkzeugmaschinenantriebseinheit 20 bewirkt. In einer weiteren Ausführung ist denkbar, dass die Aktorikeinheit 81 in dieser Anwendungssituation zum Antreiben eines Sicherheitsmittels dient, das zum Verstellen des angetriebenen Werkzeugs 18 in eine Sicherheitsposition außerhalb des Arbeitsbereichs der Werkzeugmaschine 10 und/oder zum Bedecken der Schneidkante des Werkzeugs 18 vorgesehen ist.

Durch die Erkennungseinheit 24, welche das Warnsignal 90 und das Stoppsignal 94 anhand einer Verminderung des Abstands im Überwachungsbereich 74 bzw. 76 auslöst, kann eine falsch negative Erkennung, in der die Gefahr einer Anwendungssituation unterschätzt wird, ausgeschlossen werden. Durch die weiteren Überwachungsbereiche 48, 52, und zwar durch einen Vergleich zwischen den Abstandskenngrößen, können ferner falsch positive Erkennungen, in welchen eine Warnung oder eine Sicherheitsabschaltung durch ein Überschätzen der Gefahr einer Anwendungssituation bewirkt wird, vorteilhaft verhindert werden. Zur Verhinderung der Ausgabe von solchen falsch positiven Signalen und zur Erhöhung des Anwendungskomforts kann die oben beschriebene Sensorik mittels Abstandssensoren mit einer weiteren Sensorik, insbesondere zur Materialerkennung, vorteilhaft kombiniert werden. Beispielsweise ist der zusätzliche Einsatz einer kapazitiven Erkennung und/oder einer Erkennung, welche auf der Anwendung eines Infrarot-Signals zur Erfassung der Körperwärme, auf einem spektroskopischen Verfahren zur Erkennung eines menschlichen Gewebes und/oder einem optischen Verfahren, z.B. mittels einer Videokamera, basiert, ebenfalls denkbar. Dies kann durch den Einsatz weiterer Sensormittel erreicht werden. Dies kann konstruktiv einfach dadurch erreicht werden, dass zumindest das Sensormittel 30 zusätzlich zur Abstandserfassung zur Materialerkennung vorgesehen ist. Beispielsweise kann das Sensormittel 30 als UWB-Sensor ausgebildet sein.

Die Funktionsweise der Werkzeugmaschinenüberwachungsvorrichtung 22 in der Ausführung aus Figur 1 kann der vorhergehenden Beschreibung entnommen werden, mit dem Unterschied, dass auf den Uberwachungsbereich 74 verzichtet wird. Dieser Überwachungsbereich 74, welcher als Warnbereich angesehen werden kann, bringt den zusätzlichen Vorteil, dass auf eine kritische Anwendungssituation reagiert werden kann, bevor ein physikalischer Kontakt zwischen dem Bediener und dem Werkzeug 18 entsteht.

Zum Zweck der Erläuterung der Funktionsweise der Werkzeugmaschinenüberwachungsvorrichtung 22 wurden einfache Beispiele von Anwendungssituationen betrachtet, durch welche eine Anwendungssituation durch eine mit einer scharfen Logik programmierte Recheneinheit 56 schnell und sicher erkannt werden kann. Durch die Erfassung eines Satzes von Abstandskenngrößen entsteht eine Vielfalt an möglichen Konfigurationen der Abstandskenngrößen. Zur effektiven Erkennung der Anwendungssituationen ist die Recheneinheit 56 außerdem dazu vorgesehen, die Anwendungssituationen anhand einer unscharfen Logik und einer neuronalen Logik zu erkennen. Durch eine neuronale Logik können ferner vorteilhafte Selbstlernfunktionen der Werkzeugmaschinenüberwachungsvorrichtung 22 erreicht werden.

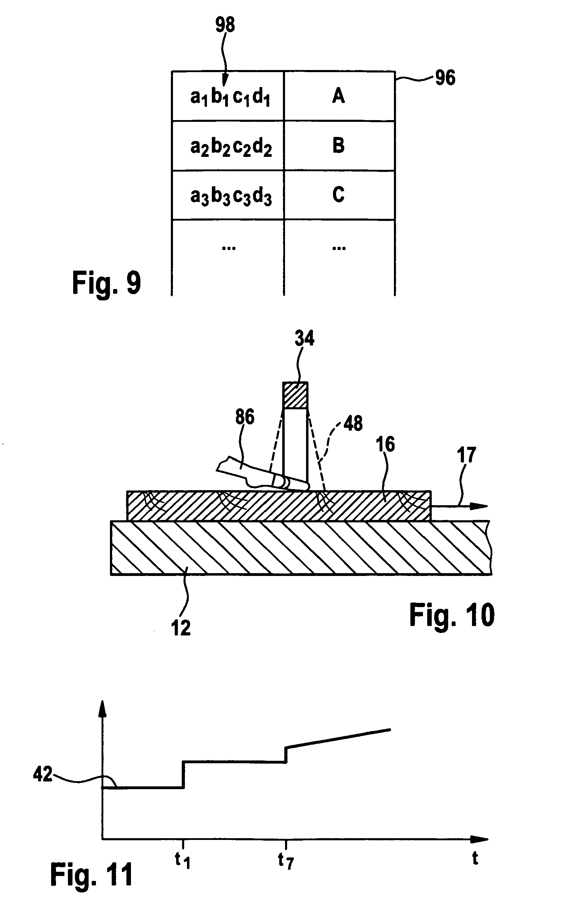

Die Recheneinheit 56 kann ferner eine Anwendungssituation mittels einer in der Speichereinheit 84 gespeicherten Datenbank 96 erkennen. Diese Datenbank 96 ist in Figur 9 dargestellt. In dieser Datenbank 96 sind Sätzen von Abstandskenngrößen 98, die durch die Symbole a₁, a₂, ..., b₁, b₂, ..., c₁, c₂ usw. dargestellt sind, jeweils eine Anwendungssituation A, B, C usw. zugeordnet. Durch Vergleich eines erfassten Satzes von Abstandskenngrößen mit den gespeicherten Sätzen kann eine entsprechende Anwendungssituation erkannt werden. Diese Datenbank 96 kann beispielsweise mittels Computersimulationen hergestellt werden, in welchen mögliche Anwendungssituationen simuliert werden, und anschließend serienmäßig in der Speichereinheit 84 gespeichert werden.

In einer weiteren Ausführungsvariante ist denkbar, dass die Erkennungseinheit 24 zur Mustererkennung vorgesehen ist. Hierzu registriert die Recheneinheit 56 absolute Werte von Abstandskenngrößen bzw. von anhand dieser Abstandskenngrößen ermittelten Abständen. Dabei kann die Recheneinheit 56 z.B. dazu programmiert sein, dass sie eine typische Handdicke (z.B. in einer Dickenspanne zwischen 2 und 5 cm) erkennt.

Ein weiterer Erkennungsmodus der Recheneinheit 56 ist in den Figuren 10 und 11 beschrieben. Eine Hand kann vom Werkstück 16 dadurch unterschieden werden, dass die Recheneinheit 56 eine kontinuierliche Änderung im Verlauf einer Abstandskenngröße, wie z.B. der Abstandskenngröße 42, registriert. Diese Variation, die in der Figur 11 ab dem Zeitpunkt t₇ des Eindringens der Hand in den Überwachungsbereich 48 wahrnehmbar ist, entspricht einer schrägen Stellung der Hand auf dem Werkstück 16 und einer dadurch entstehenden Verminderung des erfassten Abstands und kann als Musterverlauf der Abstandskenngröße 42 durch die Recheneinheit 56 erkannt werden.

Die hier anhand einer Kreissäge beschriebene Werkzeugmaschinenüberwachungsvorrichtung 22 kann sich ferner zum Einsatz bei weiteren Werkzeugmaschinen, insbesondere bei weiteren Typen von Sägen, wie z.B. Kapp- und/oder Gehrungssägen, bei Rasenmähern usw. eignen.

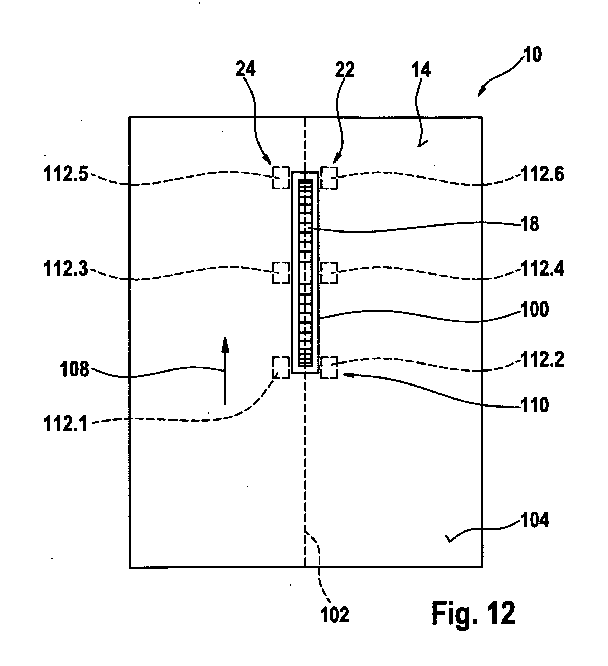

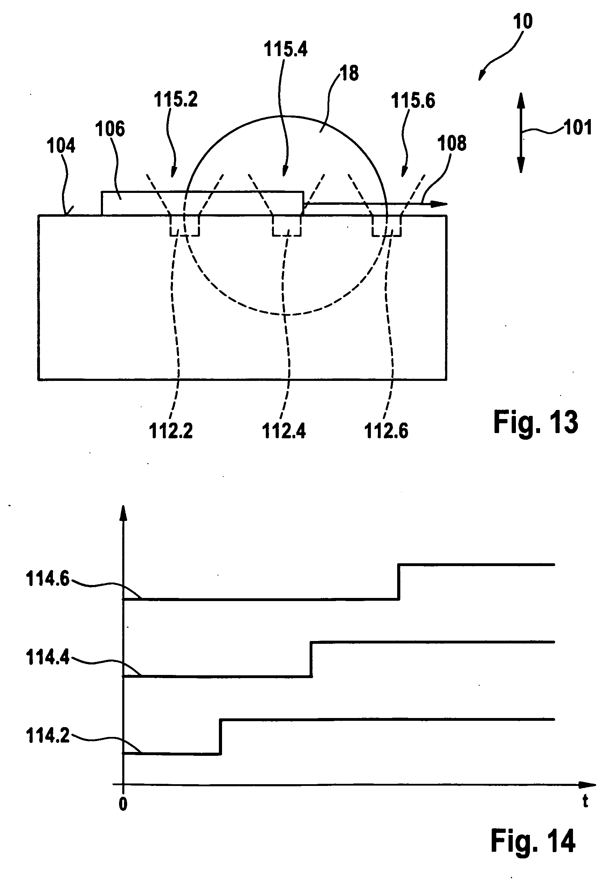

Figur 12 zeigt in einer Ansicht von oben die Werkzeugmaschine 10. Die Werkzeugmaschine 10 weist das als Sägeblatt, insbesondere als kreisförmiges Sägeblatt ausgebildetes Werkzeug 18 auf, welches aus der von einem Sägetisch gebildeten Bearbeitungsfläche 14 zum Auflegen eines Werkstücks herausragt, und zwar durch eine in der Bearbeitungsfläche 14 ausgesparte Spalte 100. Das Werkzeug 18 kann ferner als Bandsäge ausgebildet sein. Bei vorschriftsgemäßen Anwendungsbedingungen ist die Bearbeitungsfläche 14 horizontal ausgerichtet und das Werkzeug 18 ragt in vertikaler Richtung 101 aus der Bearbeitungsfläche 14 (siehe auch Figur 13). Das Werkzeug 18 wird in einem Werkzeugbetrieb von der Werkzeugmaschinenantriebseinheit 20 zu einer Rotation angetrieben. Diese Antriebsbewegung des Werkzeugs 18 definiert eine Trennebene 102, in welcher die Schneidkante des Werkzeugs 18 zum Trennen eines Werkstücks zu einer Rotation angetrieben wird. Im betrachteten Fall entspricht die Trennebene 102 einer vertikalen Ebene, die den Schwerpunkt des Werkzeugs 18 einschließt und senkrecht zur Rotationsachse des Werkzeugs 18 ausgerichtet ist. Bei der Bearbeitung des Werkstücks werden die Trennebene 102 und eine gewünschte Schnittlinie des Werkstücks in Übereinstimmung gebracht. Die Bearbeitungsfläche 14 entspricht einer Werkstückbearbeitungsebene 104, entlang welcher ein zu bearbeitendes Werkstück 106 (siehe Figur 13) bei einer vorschriftsgemäßen Bearbeitung bewegt wird. Bei dieser vorschriftsgemäßen Bearbeitung wird das Werkstück 106 in einer als Werkstückschieberichtung ausgebildeten Werkstückbeförderungsrichtung 108 entlang der Werkstückbearbeitungsebene 104 geschoben (siehe Figur 13). Die Werkstückbeförderungsrichtung 108 ist durch die Ausrichtung der Trennebene 102 festgelegt und ist hierbei parallel zur Werkstückbearbeitungsebene 104 und zur Trennebene 102.

Die Werkzeugmaschine 10 ist wie oben beschrieben mit der Werkzeugmaschinenüberwachungsvorrichtung 22 mit deren Erkennungseinheit 24 versehen. Die Erkennungseinheit 24 weist eine alternative Ausführung einer Sensoreinheit 110 auf. Die Sensoreinheit 110 umfasst einen Satz von sechs Sensormitteln 112.1 bis 112.6. Die Sensormittel 112 sind jeweils als Abstandssensor ausgebildet, der zur Erfassung von zumindest einer Abstandskenngröße 114 (siehe Figur 14) ausgebildet ist. Im betrachteten Fall sind die Sensormittel 112 jeweils als Ultrabreitband-Radarsensor ausgebildet. Zur Ausbildung der Sensormittel 112 können alternativ oder zusätzlich verschiedene Sensorikarten in Betracht gezogen werden. Der Einsatz von optischen Sensoren, die zur Erfassung einer Abstandskenngröße mittels einer Infrarotstrahlung und/oder einer Laserstrahlüng dienen, ist denkbar. In diesem Zusammenhang können die Sensormittel 112 als Triangulationssensoren oder als Laserentfernungsmesser ausgebildet sein. Außerdem ist die Ausbildung der Sensormittel 112 als akustische Sensoren, wie z.B. als Ultraschallabstandsmesser denkbar. Ebenfalls möglich ist der Einsatz von kapazitiven Sensoren, welche eine Abstandskenngröße über eine Kapazitätsmessung erfassen. In einer Ausführungsvariante ist eine Kombination von diesen Sensorikarten denkbar.

Die Sensoreinheit 110 weist zwei Gruppen von Sensormitteln 112 auf, und zwar eine erste Gruppe mit den Sensormitteln 112.1, 112.3, 112.5 und eine zweite Gruppe mit den Sensormitteln 112.2, 112.4, 112.6, wobei diese Gruppen beiderseits der Trennebene 102 angeordnet sind. Innerhalb einer Gruppe sind die Sensormittel 112 entlang der Werkstückbeförderungsrichtung 108 angeordnet. Hierbei sind sie in Werkstückbeförderungsrichtung 108 hintereinander angeordnet und bilden eine Reihe, wobei die Reihenrichtung der Werkstückbeförderungsrichtung 108 entspricht. Die Sensormittel 112 in einer Gruppe, wie z.B. die Sensormittel 112.2, 112.4, 112.6 legen jeweils einen Überwachungsbereich 115.2, 115.4 bzw. 115.6 fest, wobei die Überwachungsbereiche 115.2, 115.4, 115.6 in Reihe entlang der Werkstückbeförderungsrichtung 108 angeordnet sind. Die in Figur 12 gezeigte Anordnung der Sensormittel ist beispielhaft. Eine Konfiguration, in welcher die Sensormittel 112 lediglich auf einer Seite der Trennebene 102 angeordnet sind, ist denkbar. Es ist eine weitere Konfiguration möglich, in welcher die Sensormittel 112 relativ zur Trennebene 102 versetzt angeordnet sind.

Die Funktionsweise der Erkennungseinheit 24 in der Ausführung mit der Sensoreinheit 110 wird anhand der Figuren 13 bis 16 beschrieben. Die Darstellung der internen Schaltung der Werkzeugmaschine 10 mit der Erkennungseinheit 24 in Figur 4 findet entsprechende Anwendung, wobei die Sensoreinheit 72 durch die Sensoreinheit 110 ersetzt wird. In Figur 13 ist die Werkzeugmaschine 10 in einer Seitenansicht dargestellt. Die Sensormittel 112 sind, wie der Darstellung in Figur 13 entnehmbar ist, unterhalb der Bearbeitungsfläche 14 angeordnet. In dieser Figur ist eine vorschriftsgemäße Bearbeitung des Werkstücks 106 gezeigt, wobei es in der Werkstückbeförderungsrichtung 108 von einem Bediener entlang der Werkstückbearbeitungsebene 104 relativ zur Werkzeugmaschine 10, die relativ zum Boden stationär ausgebildet ist, geschoben wird. Der Verlauf der von den Sensormitteln 112.2, 112.4, 112.6 erfassten Abstandskenngrößen 114.2, 114.4 bzw. 114.6 ist in Figur 14 als Funktion der Zeit t dargestellt, in welcher das sukzessive Eingreifen des Werkstücks 106 in den entsprechenden Überwachungsbereich 115.2, 115.4 bzw. 115.6 der Sensormittel 112.2, 112.4, 112.6 anhand der sprungartigen Übergänge erkennbar ist. Der Anfangswert einer Abstandskenngröße 114 zum Zeitpunkt t=0 entspricht einem unbedeckten Zustand des entsprechenden Sensormittels 112.2, 112.4 bzw. 112.6.

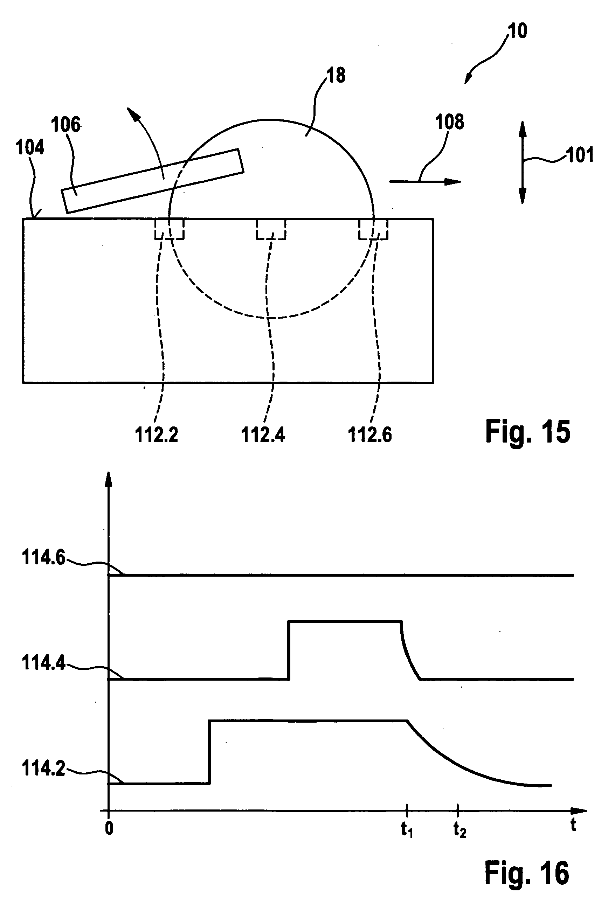

Die Erkennungseinheit 24 in der Ausführung mit der Sensoreinheit 110 ist dazu vorgesehen, eine unvorhergesehene Bewegung des Werkstücks 106, und zwar im betrachteten Beispiel ein schlagartiges Entfernen des Werkstücks 106 von der Bearbeitungsfläche 14, zu erkennen. Dies ist in Figur 15 schematisch dargestellt. In dieser Anwendungssituation erfährt an einem Zeitpunkt t₁ das Werkstück 106 aufgrund eines Verkantens eine Kraft, die eine Komponente in vertikaler Richtung 101 nach oben und eine Komponente entgegen der Werkstückbeförderungsrichtung 108 aufweist. Demnach hebt sich das Werkstück 106 von der Werkstückbearbeitungsebene 104 in vertikaler Richtung 101 nach oben ab und führt eine Rückbewegung aus, d.h. es bewegt sich entgegen der Werkstückbeförderungsrichtung 108 in Richtung auf den Bediener. Der entsprechende Verlauf der Abstandskenngrößen 114 ist in Figur 16 dargestellt. Zur Erkennung der Anwendungssituation werden die entsprechenden zeitlichen Änderungen der Abstandskenngrößen 114 sowie ein Vergleich zwischen den erfassten Abstandskenngrößen 114 ausgewertet.

Eine unvorhergesehene bzw. unkontrollierte Bewegung des Werkstücks 106 relativ zur Werkzeugmaschine 10 kann aus einem Vergleich der momentanen Werte der Abstandskenngrößen 114.2 und 114.4 erkannt werden. Insbesondere wird von der Recheneinheit 56 registriert, dass eine Änderung der Abstandskenngröße 114.4 zum Zeitpunkt t₁, die auf eine Änderung des Abstands vom Sensormittel 112.4 zum Werkstück 106 hindeutet, erfolgt, wobei der Wert der Abstandskenngröße 114.2 zum Zeitpunkt t₁ auf einen weiter bedeckten Zustand des Sensormittels 112.2 hindeutet. Diese Erkennung löst ein Erkennungssignal durch die Erkennungseinheit 24 aus, anhand welcher Schutzmaßnahmen eingeleitet werden.

Außerdem kann eine unbeabsichtigte Bewegung des Werkstücks 106 durch eine Auswertung der Änderungswerte der Abstandskenngrößen 114 erkannt werden. Übersteigt einer der Änderungswerte eine vorgegebene Schwelle, so kann die Recheneinheit 56 eine schlagartige Bewegung des Werkstücks 106 relativ zur Werkstückbearbeitungsebene 104 von einer Bewegung unterscheiden, die vom Bediener beabsichtigt und dementsprechend getätigt wird. Hierbei werden die Änderungswerte mittels der Recheneinheit 56 eingestuft, indem ein momentaner Änderungswert einem Gefahrgrad, wie z.B. "normale Änderung" oder "schlagartige Änderung" zugeordnet wird. Verschiedenen Gefahrgraden können verschiedene Sicherheitsmaßnahmen zugeordnet sein. Im betrachteten Beispiel wird der Änderungswert der Abstandskenngröße 114.4 zum Zeitpunkt t₁ dem Gefahrgrad "schlagartige Änderung" zugeordnet, wodurch ein Erkennungssignal der Erkennungseinheit 24 zum Einleiten von Schutzmaßnahmen ausgelöst wird.

Des Weiteren kann mittels der Erkennungseinheit 24 die in Figur 15 dargestellte Bewegung des Werkstücks 106 relativ zur Werkstuckbearbeitungsebene 104 in deren Richtung charakterisiert werden. Hierbei wird von der Recheneinheit 56 registriert, dass eine simultane Änderung von zwei Abstandskenngrößen 114.2 und 114.4 zum Zeitpunkt t₁ erfolgt, was auf die Abhebbewegung des Werkstücks 106 von der Werkstückbearbeitungsebene 104 hindeutet.

Ferner kann mittels der Erkennungseinheit 24 die Rückbewegungskomponente des Werkstücks 106 entgegen der Werkstückbeförderungsrichtung 108 erkannt werden. Dies kann schon daran erkannt werden, dass die Abstandskenngrößen 114.2, 114.4 nach dem Zeitpunkt t₁ unterschiedliche Werte aufweisen, was auf die in Figur 15 gezeigte Schrägstellung des Werkstücks 106 relativ zur Werkstückbearbeitungsebene 104 hindeutet, in welcher der Abstand des Werkstücks 106 zum Sensormittel 112.4 größer ist als zum Sensormittel 112.2. Die Rückbewegung kann außerdem durch einen Vergleich der Änderungswerte der Abstandskenngrößen 114.2 und 114.4 durch die Recheneinheit 56 vorgenommen und ausgewertet werden. Die Recheneinheit 56 kann insbesondere registrieren, dass die Abstandskenngröße 114.4 einen größeren Änderungswert aufweist als die Abstandskenngröße 114.2. Dies deutet darauf hin, dass der Abstand des Werkstücks 106 zur Werkstückbearbeitungsebene 104 im Überwachungsbereich 115.4 des Sensormittels 112.4 schneller steigt als im Überwachungsbereich 115.2 des Sensormittels 112.2. Daraus kann erkannt werden, dass ein Schleudern des Werkstücks 106 mit einer Rückbewegung in Richtung auf den Bediener stattfindet, was mittels des gekrümmten Pfeils in Figur 15 schematisch dargestellt ist. Diese Rückbewegung kann ferner auch daran erkannt werden, dass zu einem Zeitpunkt t₂ > t₁ die Abstandskenngröße 114.4 ihren Anfangswert aufweist, während die Abstandskenngröße 114.2 einem weiter bedeckten Zustand des Sensormittels 112.2 entspricht.

Weitere Kombinationen in der Überwachung der Abstandskenngrößen 114 zur Erkennung einer unbeabsichtigten Bewegung des Werkstücks 106 relativ zur Werkzeugmaschine 10 sind denkbar. Wie weiter oben erwähnt, können die hier beschriebenen Erkennungen durch Heranziehen von Daten der Datenbank 96 erfolgen. Anhand eines Erkennungssignals der Erkennungseinheit 24 können verschiedene Schutzmaßnahmen getroffen werden. Wie oben beschrieben, kann mittels der Aktorikeinheit 81 eine Sicherheitsabschaltung der Werkzeugmaschinenantriebseinheit 20 ausgelöst werden. Es ist ferner denkbar, dass die Aktorikeinheit 81 das Antreiben eines mechanischen Sicherheitsmittels betätigt, das z.B. ein Versenken des Werkzeugs 18 unterhalb der Werkstückbearbeitungsebene 104 und/oder ein Bedecken der Schneidkante des Werkzeugs 18 antreibt.

In einer weiteren Ausführungsvariante ist denkbar, dass die Werkzeugmaschine 10 eine mit einer als Spaltkeil ausgebildete Schutzvorrichtung aufweist, die in der Werkstückbeförderungsrichtung 108 hinter dem Werkzeug 18 angeordnet ist. Diese Schutzvorrichtung kann als Trägereinheit zum Tragen von zumindest einem weiteren Sensormittel zur Erfassung einer Abstandskenngröße ausgebildet sein, das oberhalb der Werkstückbearbeitungsebene 104 angeordnet ist.

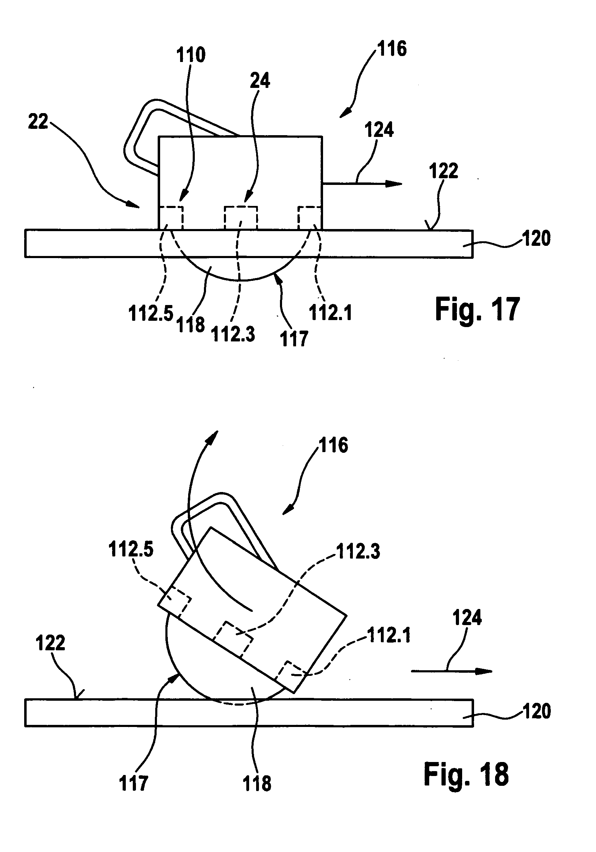

In Figur 17 ist eine als Handkreissäge ausgebildete Werkzeugmaschine 116 in einer Seitenansicht dargestellt. Diese weist ein Werkzeugmaschinenbauteil 117 auf, das in der Form eines kreisförmigen Sägeblatts als Werkzeug 118 ausgebildet ist. Das Werkzeug 118 wird im Betrieb von einer nicht näher dargestellten Werkzeugmaschinenantriebseinheit zu einer Rotation angetrieben. Diese Rotationsbewegung definiert wie oben beschrieben eine Trennebene. In Figur 17 ist ein Werkstück 120 mittels nicht näher dargestellter Elemente in einer relativ zum Boden festen Position eingespannt. In einer vorschriftsgemäßen Bearbeitung des Werkstücks 120 wird die Werkzeugmaschine 116 an einer Oberfläche des Werkstücks 120 bewegt, wobei diese der Werkzeugmaschine 116 zugewandte Oberfläche eine Werkstückbearbeitungsebene 122 definiert. Insbesondere wird die Werkzeugmaschine 116 vorschriftsgemäß in einer Werkzeugmaschinenbeförderungsrichtung 124 relativ zum Werkstück 120 geschoben, die parallel zur Trennebene und zur Werkstückbearbeitungsebene 122 ist.

Die Werkzeugmaschine 116 ist mit der Werkzeugmaschinenüberwachungsvorrichtung 22 versehen. Diese weist die Erkennungseinheit 24 auf, welche die Sensoreinheit 110 mit den Sensormitteln 112 umfasst. Wie in der in Figur 12 gezeigten Konfiguration ist die Sensoreinheit 110 in zwei Gruppen von Sensormitteln 112 geteilt, die beiderseits der Trennebene angeordnet sind. Ferner sind die Sensormittel 112 innerhalb einer Gruppe in Reihe entlang der Werkzeugmaschinenbeförderungsrichtung 124 angeordnet.

Figur 18 zeigt die Werkzeugmaschine 116, welche eine vom Bediener unbeabsichtigte Bewegung relativ zur Werkstückbearbeitungsebene 122 ausführt. Hierbei findet ein Verkanten des Werkzeugs 118 im Werkstück 120 statt, so dass eine Abhebbewegung der Werkzeugmaschine 116 relativ zur Werkstückbearbeitungsebene 122 erfolgt. Die Bewegung der Werkzeugmaschine 116 relativ zum Werkstück 120 besitzt ferner eine Komponente, die entgegen der Werkzeugmaschinenbeförderungsrichtung 124 gerichtet ist, d.h. das Werkstück 120 führt eine Rückbewegung entgegen der Werkzeugmaschinenbeförderungsrichtung 124 aus.

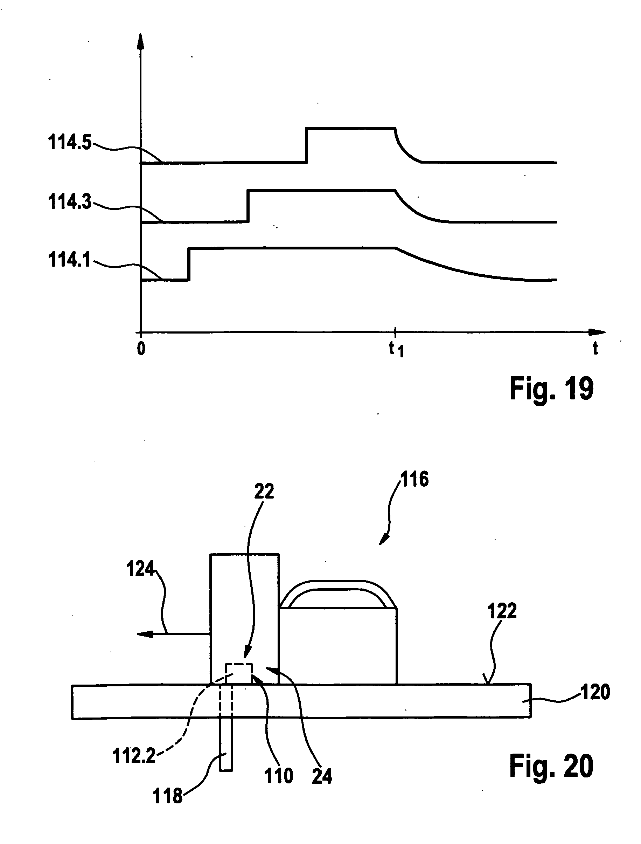

Der Verlauf der Abstandskenngrößen 114.1, 114.3, 114.5, die den in Figur 18 gezeigten Sensormitteln 112.1, 112.3 bzw. 112.5 zugeordnet sind, ist als Funktion der Zeit t in Figur 19 gezeigt. Vom Zeitpunkt t=0 bis zum Zeitpunkt t₁ des Verkantens werden die Sensormittel 112.1, 112.3, 112.5, wie anhand von Figur 14 oben erklärt, sukzessiv vom Werkstück 120 bedeckt. Eine simultane Änderung der Abstandskenngrößen 114 am Zeitpunkt t₁, die auf eine Abhebbewegung der Werkzeugmaschine 116 von der Werkstückbearbeitungsebene 122 hindeutet, wird von der Recheneinheit 56 registriert. Die Recheneinheit 56 führt ferner einen Vergleich der momentanen Änderungswerte der Abstandskenngrößen 114 durch. Daraus ist erkennbar, dass der Abstand des Sensormittels 112.5 zum Werkstück 120 schneller steigt als der Abstand des Sensormittels 112.1 zum Werkstück 120. Dies deutet darauf hin, dass das Werkzeug 118 eine Bewegung in Richtung auf den Bediener ausführt, d.h. mit zumindest einer Komponente entgegen der Werkzeugmaschinenbeförderungsrichtung 124. Dies wird von der Recheneinheit 56 als Gefahrsituation erkannt, wodurch Sicherheitsmaßnahmen, insbesondere das Stoppen des Antriebs des Werkzeugs 118, eingeleitet werden. Die Beschreibung der Figur 16 findet ferner eine dementsprechende Anwendung. Als weitere Sicherheitsmaßnahme ist das Auslösen einer mechanischen Schutzvorrichtung, wie z.B. einer Schutzhaube zum Bedecken der Schneidkante des Werkzeugs 118, denkbar. Es ist in einer Ausführungsvariante möglich, dass Stabilisationsmittel zum Stabilisieren der Werkzeugmaschine 116, wie z.B. Gegengewichtelemente zum Ausgleichen der schlagartigen Abhebbewegung, betätigt werden.

Zur Erhöhung der Zuverlässigkeit der Erkennungseinheit 24 kann diese mit einem zusätzlichen Sensor versehen sein, welcher eine zu der Sensoreinheit 110 redundante Sensorik darstellt. Insbesondere kann die Erkennungseinheit 24 zusätzlich zur Sensoreinheit 110 mit einem Beschleunigungssensor versehen sein.

Figur 20 zeigt eine alternative Ausführung der Werkzeugmaschine 116. Diese ist als Stichsäge ausgebildet, mit einer Ausführung des Werkzeugs 118 als längliches Sägeblatt. Bezüglich der Ausführung nach Figur 16 werden Bauteile, die eine gleiche Funktion aufweisen, mit dem gleichen Bezugszeichen bezeichnet. Das Werkzeug 118 wird in einem Werkzeugantrieb zu einer Hubbewegung senkrecht zur Werkstückbearbeitungsebene 122 angetrieben. Diese Bewegung definiert eine Trennebene, die den Schwerpunkt des Werkzeugs 118 einschließt, senkrecht zur Werkstückbearbeitungsebene 122 und parallel zu den Längsseitenflächen des Sägeblatts ausgerichtet ist. Die Werkzeugmaschine 116 wird vorschriftsgemäß wie oben beschrieben in der Werkzeugmaschinenbeförderungsrichtung 124 vom Bediener geschoben. Die Sensoreinheit 110 weist ein Paar von Sensormitteln 112.1, 112.2 auf, die beiderseits der Trennebene angeordnet sind. Bei einem Verkanten des Werkzeugs 118 oder bei einem Stoßen des Werkzeugs 118 auf ein sich unterhalb des Werkstücks 120 befindendes Hindernis kann die Werkzeugmaschine 116 eine Abhebbewegung relativ zur Werkstückbearbeitungsebene 122 ausführen. Dies kann mittels der Erkennungseinheit 24 durch eine Auswertung von durch die Sensormittel 112 erfassten Abstandskenngrößen 114 erfolgen, die um Wiederholungen zu vermeiden, hier nicht näher beschrieben wird. Als Sicherheitsmaßnahme kann wie oben beschrieben ein Sicherheitsabschalten des Antriebs des Werkzeugs 118 erfolgen, z.B. durch ein Abschalten einer Werkzeugmaschinenantriebseinheit oder durch das Entkoppeln des Werkzeugs 118 von der Werkzeugmaschinenantriebseinheit.

Eine Anordnung von Sensormitteln 112 beiderseits einer Trennebene ist bei einer Ausführung der Werkzeugmaschine 116, in welcher das Bearbeiten eines Werkstücks durch ein Handhaben der Werkzeugmaschine 116 von einem Bediener erfolgt, besonders vorteilhaft. Hierdurch kann von der Erkennungseinheit 24 zwischen einer Anwendungssituation, in welcher ein geschnittenes Teil des Werkstücks getrennt wird und z.B. auf den Boden fällt, von einer Anwendungssituation unterschieden werden, in welcher die Werkzeugmaschine 116 sich von der Werkstückbearbeitungsebene 122 trennt.

## Patentansprüche

1. Werkzeugmaschine, insbesondere Kreissäge, mit einer Werkzeugmaschinenüberwachungsvorrichtung, welche eine Erkennungseinheit (24) mit zumindest zwei Sensormitteln zur Erkennung einer Anwendungssituation bei einer Werkzeugmaschine (10; 116) anhand wenigstens einer Abstandskenngröße aufweist, **dadurch gekennzeichnet, dass** die Erkennungseinheit (24) dazu vorgesehen ist, eine Abhebbewegung eines Werkstücks (106) relativ zu einer Werkstückbearbeitungsebene (104; 122), anhand eines Satzes von Abstandskenngrößen (42, 44, 46, 82, 98; 114.1 - 114.6) zu erkennen, wobei die Sensormittel jeweils ein Blickfeld bzw. ein Erfassungsfeld aufweisen, welches auf eine Werkzeugmaschinenbearbeitungsfläche zum Platzieren eines zu bearbeitenden Werkstücks gerichtet ist und die erfassten Abstandskenngrößen dem Abstand der Sensormittel zur Bearbeitungsfläche oder zu einem auf der Bearbeitungsfläche aufgelegtem Werkstück oder zu den Händen eines Bedieners entsprechen, wobei die Erkennungseinheit (24) dazu vorgesehen ist, die Anwendungssituation anhand einer Differenz zwischen Abstandskenngrößen (42, 44, 46, 82,114.1 - 114.6) zu erkennen.

2. Werkzeugmaschinenüberwachungsvorrichtung nach Anspruch 1, **dadurch gekennzeichnet, dass** die Erkennungseinheit (24) dazu vorgesehen ist, die Anwendungssituation anhand einer zeitlichen Änderung einer Abstandskenngrößen (42, 44, 46, 82,114.1 - 114.6) zu erkennen.

3. Werkzeugmaschinenüberwachungsvorrichtung nach Anspruch 1, **dadurch gekennzeichnet, dass** die Erkennungseinheit (24) dazu vorgesehen ist, die Anwendungssituation anhand einer Differenz zwischen Abstandskenngrößen (42, 44, 46, 82), gemessen zu einem Zeitpunkt, zu erkennen.

4. Werkzeugmaschinenüberwachungsvorrichtung nach Anspruch 1, **dadurch gekennzeichnet, dass** die Erkennungseinheit (24) dazu vorgesehen ist, die Anwendungssituation anhand einer Differenz zwischen Abstandskenngrößen (42, 44, 46, 82), gemessen zu verschiedenen Zeitpunkten, zu erkennen.

5. Werkzeugmaschinenüberwachungsvorrichtung nach Anspruch 2, **dadurch gekennzeichnet, dass** die Erkennungseinheit (24) dazu vorgesehen ist, bei einer zeitlichen Variation von zumindest einer Abstandskenngröße (114.2) den Änderungswert der Abstandskenngröße (114.2) einzustufen.

6. Werkzeugmaschinenüberwachungsvorrichtung nach Anspruch 1, **dadurch gekennzeichnet, dass** die Erkennungseinheit (24) zumindest zwei Sensormittel (28, 30, 32, 58, 60, 62. 78; 112.1 - 112.6) zur Erfassung zumindest einer Abstandskenngröße (42, 44, 46,82; 114.1 - 114.6) aufweist.

7. Werkzeugmaschinenüberwachungsvorrichtung nach Anspruch 6, **dadurch gekennzeichnet, dass** die Erkennungseinheit (24) zumindest zwei Sensormittel (112.2, 112.4, 112.6) zur Erfassung zumindest einer Abstandskenngröße (114.2, 114.4, 114.6) aufweist, wobei von den Sensormitteln (112.2, 112.4, 112.6) festgelegte Überwachungsbereiche (115.2, 115.4, 115.6) entlang einer Beförderungsrichtung (108; 124) der Werkzeugmaschine (10; 116) angeordnet sind.

8. Werkzeugmaschinenüberwachungsvorrichtung nach Anspruch 6 oder 7, **dadurch gekennzeichnet, dass** die Erkennungseinheit (24) zumindest zwei Sensormittel (112.1, 112.2) zur Erfassung zumindest einer Abstandskenngröße (114.1, 114.2) aufweist, die beiderseits einer Trennebene (102) der Werkzeugmaschine (10) angeordnet sind.

9. Werkzeugmaschinenüberwachungsvorrichtung nach einem der vorhergehenden Ansprüche, **dadurch gekennzeichnet, dass** die Erkennungseinheit (24) dazu vorgesehen ist, anhand von zumindest einer erfassten Abstandskenngröße (114.2, 114.4, 114.6) eine Rückbewegung eines Werkstücks (106) entgegen einer Werkstückbeförderungsrichtung (108) zu erkennen.

10. Werkzeugmaschinenüberwachungsvorrichtung nach einem der vorhergehenden Ansprüche, **dadurch gekennzeichnet, dass** die Erkennungseinheit (24) dazu vorgesehen ist, anhand von zumindest einer erfassten Abstandskenngröße (114.1, 114.3, 114.5) eine Rückbewegung der Werkzeugmaschine (116) entgegen einer Werkzeugmaschinenbeförderungsrichtung (124) zu erkennen,

11. Werkzeugmaschinenüberwachungsvorrichtung nach einem der vorhergehenden Ansprüche, **dadurch gekennzeichnet, dass** die Erkennungseinheit (24) zumindest ein Sensormittel (112) zur Erfassung einer Abstandskenngröße (114) aufweist, das zu einem ultrabreitbandigen Betrieb vorgesehen ist.

12. Werkzeugmaschinenüberwachungsvorrichtung nach einem der vorhergehenden Ansprüche, **dadurch gekennzeichnet, dass** die Erkennungseinheit (24) zumindest zwei Überwachungsbereiche (48, 50, 52, 74, 76) zum Überwachen eines Anwendungsprozesses der Werkzeugmaschine (10) festiegt.

13. Werkzeugmaschinenüberwachungsvorrichtung nach Anspruch 14, **dadurch gekennzeichnet, dass** den Überwachungsbereichen (74, 76) jeweils ein unterschiedlicher Betriebsmodus der Werkzeugmaschine (10) zugeordnet ist.

14. Werkzeugmaschinenüberwachungsvorrichtung nach Anspruch 12 oder 13, **dadurch gekennzeichnet, dass** zumindest einem der Überwachungsbereiche (74) ein Warnmodus der Werkzeugmaschine (10) zugeordnet ist

15. Werkzeugmaschinenüberwachungsvorrichtung nach Anspruch 14 **dadurch gekennzeichnet, dass** die Erkennungseinheit (24) im Zusammenwirken mit einer Werkzeugmaschinenantriebseinheit (20) zum Antreiben eines Werkzeugs (18) zum Verlangsamen eines Werkzeugantriebs im Warnmodus vorgesehen ist.

16. Werkzeugmaschinenüberwachungsvorrichtung nach einem der Ansprüche 12 bis 15, **dadurch gekennzeichnet, dass** zumindest einem der Überwachungsbereiche (76) ein Beseitigen eines angetriebenen Werkzeugs (18) aus einem Arbeitsbereich der Werkzeugmaschine (10) zugeordnet ist.

17. Werkzeugmaschinenüberwachungsvorrichtung nach einem der Ansprüche 12 bis 16. **dadurch gekennzeichnet, dass** zumindest einem der Überwachungsbereiche (76) eine Sicherheitsabschaltung der Werkzeugmaschine (10) zugeordnet ist.

18. Werkzeugmaschinenüberwachungsvorrichtung nach einem der vorhergehenden Ansprüche, **dadurch gekennzeichnet, dass** die Erkennungseinheit (24) eine Recheneinheit (56) umfasst, die dazu vorgesehen ist, die Anwendungssituation durch eine auf einer unscharfen und/oder neuronalen Logik basierende Auswertung von Abstandskenngrößen (42, 44, 46, 82) zu erkennen.

19. Werkzeugmaschinenüberwachungsvorrichtung nach einem der vorhergehenden Ansprüche, **dadurch gekennzeichnet, dass** die Erkennungseinheit (24) eine Datenbank (96) aufweist, in welcher einem Satz von Abstandskenngrößen (98) eine Anwendungssituation zugeordnet ist.

20. Werkzeugmaschinenüberwachungsvorrichtung nach einem der vorhergehenden Ansprüche, **dadurch gekennzeichnet, dass** die Erkennungseinheit (24) dazu vorgesehen ist, das Vorhandensein eines menschlichen Körperteils in einem Überwachungsbereich (48, 50, 52, 74, 76) anhand wenigstens einer Abstandskenngröße (42, 44, 46, 82, 98) zu erkennen.

21. Werkzeugmaschinenüberwachungsvorrichtung nach einem der vorhergehenden Ansprüche, **gekennzeichnet durch** eine Aktorikeinheit (81) zur Durchführung einer Sicherheitsmaßnahme, die mit der Erkennungseinheit (24) in Wirkverbindung steht.

22. Verfahren zur Erkennung einer Anwendungssituation bei einem Anwendungsprozess einer Werkzeugmaschine (10; 116), **dadurch gekennzeichnet, dass** zur Erkennung einer Abhebbewegung eines Werkstücks (106) relativ zu einer Werkstückbearbeitungsebene (104; 122), ein Satz von Abstandskenngrößen (42, 44, 46, 82, 98; 114.1 - 114.6), insbesondere eine Differenz zwischen Abstandskenngrößen (42, 44, 46, 82,114.1 - 114.6), mittels einer Erkennungseinheit (24) mit zumindest zwei Sensormitteln erfasst wird, wobei die Sensormittel jeweils ein Blickfeld bzw. ein Erfassungsfeld aufweisen, welches auf eine Werkzeugmaschinenbearbeitungsfläche zum Platzieren eines zu bearbeitenden Werkstücks gerichtet ist

## Claims

1. Machine tool, in particular a circular saw, comprising a machine tool monitoring device which has a detection unit (24) having at least two sensor means for detecting an application situation at a machine tool (10; 116) on the basis of at least one distance parameter, **characterized in that** the detection unit (24) is provided for detecting a lifting movement of a workpiece (106) relative to a workpiece machining plane (104; 122) on the basis of a set of distance parameters (42, 44, 46, 82, 98; 114.1 - 114.6), wherein the sensor means each have a field of view or a recording field which is directed towards a machine tool machining surface for placing a workpiece to be machined, and the recorded distance parameters correspond to the distance of the sensor means from the machining surface or from a workpiece placed on the machining surface or from the hands of an operator, wherein the detection unit (24) is provided for detecting the application situation on the basis of a difference between distance parameters (42, 44, 46, 82, 114.1 - 114.6).

2. Machine tool monitoring device according to Claim 1, **characterized in that** the detection unit (24) is provided for detecting the application situation on the basis of a change in a distance parameter (42, 44, 46, 82, 114.1 - 114.6) with respect to time.

3. Machine tool monitoring device according to Claim 1, **characterized in that** the detection unit (24) is provided for detecting the application situation on the basis of a difference between distance parameters (42, 44, 46, 82) measured at one instant.

4. Machine tool monitoring device according to Claim 1, **characterized in that** the detection unit (24) is provided for detecting the application situation on the basis of a difference between distance parameters (42, 44, 46, 82) measured at various instances.

5. Machine tool monitoring device according to Claim 2, **characterized in that** the detection unit (24) is provided for classifying the change value of the distance parameter (114.2) in the event of a variation in at least one distance parameter (114.2) with respect to time.

6. Machine tool monitoring device according to Claim 1, **characterized in that** the detection unit (24) has at least two sensor means (28, 30, 32, 58, 60, 62, 78; 112.1 - 112.6) for recording at least one distance parameter (42, 44, 46, 82; 114.1 - 114.6).

7. Machine tool monitoring device according to Claim 6, **characterized in that** the detection unit (24) has at least two sensor means (112.2, 112.4, 112.6) for recording at least one distance parameter (114.2, 114.4, 114.6), wherein monitoring regions (115.2, 115.4, 115.6) established by the sensor means (112.2, 112.4, 112.6) are arranged along a conveying direction (108; 124) of the machine tool (10; 116).

8. Machine tool monitoring device according to Claim 6 or 7, **characterized in that** the detection unit (24) has at least two sensor means (112.1, 112.2) for recording at least one distance parameter (114.1, 114.2) which are arranged on both sides of a parting plane (102) of the machine tool (10).

9. Machine tool monitoring device according to one of the preceding claims, **characterized in that** the detection unit (24) is provided for detecting a return movement of a workpiece (106) against a workpiece conveying direction (108) on the basis of at least one recorded distance parameter (114.2, 114.4, 114.6).

10. Machine tool monitoring device according to one of the preceding claims, **characterized in that** the detection unit (24) is provided for detecting a return movement of the machine tool (116) against a machine tool conveying direction (124) on the basis of at least one recorded distance parameter (114.1, 114.3, 114.5).

11. Machine tool monitoring device according to one of the preceding claims, **characterized in that** the detection unit (24) has at least one sensor means (112) for recording a distance parameter (114) which is provided for ultra-wideband operation.

12. Machine tool monitoring device according to one of the preceding claims, **characterized in that** the detection unit (24) establishes at least two monitoring regions (48, 50, 52, 74, 76) for monitoring an application process of the machine tool (10).

13. Machine tool monitoring device according to Claim 14, **characterized in that** in each case a different operating mode of the machine tool (10) is assigned to the monitoring regions (74, 76).

14. Machine tool monitoring device according to Claim 12 or 13, **characterized in that** a warning mode of the machine tool (10) is assigned to at least one of the monitoring regions (74).

15. Machine tool monitoring device according to Claim 14, **characterized in that** the detection unit (24), in interaction with a machine tool drive unit (20) for driving a tool (18), is provided for slowing down a tool drive in the warning mode.

16. Machine tool monitoring device according to one of Claims 12 to 15, **characterized in that** removal of a driven tool (18) from a working region of the machine tool (10) is assigned to at least one of the monitoring regions (76).

17. Machine tool monitoring device according to one of Claims 12 to 16, **characterized in that** a safety cut-off of the machine tool (10) is assigned to at least one of the monitoring regions (76).

18. Machine tool monitoring device according to one of the preceding claims, **characterized in that** the detection unit (24) has a computing unit (56) which is provided for detecting the application situation by an evaluation of distance parameters (42, 44, 46, 82) which is based on fuzzy and/or neural logic.

19. Machine tool monitoring device according to one of the preceding claims, **characterized in that** the detection unit (24) has a database (96) in which an application situation is assigned to a set of distance parameters (98).

20. Machine tool monitoring device according to one of the preceding claims, **characterized in that** the detection unit (24) is provided for detecting the presence of a human body part in a monitoring region (48, 50, 52, 74, 76) on the basis of at least one distance parameter (42, 44, 46, 82, 98).

21. Machine tool monitoring device according to one of the preceding claims, **characterized by** an actuator unit (81) for carrying out a safety measure, said actuator unit (81) being operatively connected to the detection unit (24).

22. Method for detecting an application situation during an application process of a machine tool (10; 116), **characterized in that**, to detect a lifting movement of a workpiece (106) relative to a workpiece machining plane (104; 122), a set of distance parameters (42, 44, 46, 82, 98; 114.1 - 114.6), in particular a difference between distance parameters (42, 44, 46, 82, 114.1 - 114.6), is recorded by means of a detection unit (24) having at least two sensor means, wherein the sensor means each have a field of view or a recording field which is directed towards a machine tool machining surface for placing a workpiece to be machined.

## Revendications

1. Machine-outil, notamment scie circulaire, avec un dispositif de surveillance de machine-outil qui comporte une unité de détection (24) dotée d'au moins deux moyens de capteur pour détecter une situation d'utilisation dans une machine-outil (10 ; 116) à l'aide d'au moins une grandeur caractéristique d'écartement, **caractérisé en ce que** l'unité de détection (24) est prévue pour détecter un mouvement de soulèvement d'une pièce usinée (106) par rapport à un plan d'usinage de pièce usinée (104 ; 122), à l'aide d'un ensemble de grandeurs caractéristiques d'écartement (42, 44, 46, 82, 98 ; 114.1 à 114.6), les moyens de capteur comportant respectivement un champ de vision et/ou un champ de captage disposés sur une surface d'usinage de machine-outil pour positionner une pièce usinée à usiner et les grandeurs caractéristiques d'écartement captées correspondant à l'écartement des moyens de capteur par rapport à la surface d'usinage ou par rapport à la pièce usinée reposant sur la surface d'usinage ou par rapport aux mains d'un utilisateur, l'unité de détection (24) étant prévue pour détecter la situation d'utilisation à l'aide d'une différence entre des grandeurs caractéristiques d'écartement (42, 44, 46, 82,114.1 à 114.6).

2. Dispositif de surveillance de machine-outil selon la revendication 1, **caractérisé en ce que** l'unité de détection (24) est prévue pour détecter la situation d'utilisation à l'aide d'une variation dans le temps de grandeurs caractéristiques d'écartement (42, 44, 46, 82, 114.1 à 114.6).

3. Dispositif de surveillance de machine-outil selon la revendication 1, **caractérisé en ce que** l'unité de détection (24) est prévue pour détecter la situation d'utilisation à l'aide d'une différence entre des grandeurs caractéristiques d'écartement (42, 44, 46, 82) mesurées à un instant donné.

4. Dispositif de surveillance de machine-outil selon la revendication 1, **caractérisé en ce que** l'unité de détection (24) est prévue pour détecter la situation d'utilisation à l'aide d'une différence entre des grandeurs caractéristiques d'écartement (42, 44, 46, 82) mesurées à différents instants.

5. Dispositif de surveillance de machine-outil selon la revendication 2, **caractérisé en ce que** l'unité de détection (24) est prévue pour déterminer, en cas de variation dans le temps d'au moins une grandeur caractéristique d'écartement (114.2), la valeur de la variation de la grandeur caractéristique d'écartement (114.2).

6. Dispositif de surveillance de machine-outil selon la revendication 1, **caractérisé en ce que** l'unité de détection (24) comporte au moins deux moyens de capteur (28, 30, 32, 58, 60, 62, 78 ; 112.1 à 112.6) pour capter au moins une grandeur caractéristique d'écartement (42, 44, 46, 82 ; 114.1 à 114.6).

7. Dispositif de surveillance de machine-outil selon la revendication 6, **caractérisé en ce que** l'unité de détection (24) comporte au moins deux moyens de capteur (112.2, 112.4, 112.6) pour capter au moins une grandeur caractéristique d'écartement (114.2, 114.4, 114.6), des zones de surveillance (115.2, 115.4, 115.6) définies par les moyens de capteur (112.2, 112.4, 112.6) étant disposées le long d'une direction d'acheminement (108 ; 124) de la machine-outil (10 ; 116) .

8. Dispositif de surveillance de machine-outil selon la revendication 6 ou 7, **caractérisé en ce que** l'unité de détection (24) comporte au moins deux moyens de capteur (112.1, 112.2) pour capter au moins une grandeur caractéristique d'écartement (114.1, 114.2), lesdits moyens étant disposés des deux côtés d'un plan de séparation (102) de la machine-outil (10).

9. Dispositif de surveillance de machine-outil selon l'une quelconque des revendications précédentes, **caractérisé en ce que** l'unité de détection (24) est prévue pour détecter, à l'aide d'au moins une grandeur caractéristique d'écartement (114.2, 114.4, 114.6) captée, un mouvement de recul d'une pièce usinée (106) par rapport à une direction d'acheminement (108) de la pièce usinée.

10. Dispositif de surveillance de machine-outil selon l'une quelconque des revendications précédentes, **caractérisé en ce que** l'unité de détection (24) est prévue pour détecter, à l'aide d'au moins une grandeur caractéristique d'écartement (114.1, 114.3, 114.5) captée, un mouvement de recul de la machine-outil (116) par rapport à une direction d'acheminement (124) de la machine-outil.

11. Dispositif de surveillance de machine-outil selon l'une quelconque des revendications précédentes, **caractérisé en ce que** l'unité de détection (24) comporte au moins un moyen de capteur (112) pour capter une grandeur caractéristique d'écartement (114), ledit moyen étant prévu pour un fonctionnement en mode à bande ultralarge.

12. Dispositif de surveillance de machine-outil selon l'une quelconque des revendications précédentes, **caractérisé en ce que** l'unité de détection (24) définit au moins deux zones de surveillance (48, 50, 52, 74, 76) pour surveiller un processus d'utilisation de la machine-outil (10).

13. Dispositif de surveillance de machine-outil selon la revendication 14, **caractérisé en ce qu'**un mode de fonctionnement différent de la machine-outil (10) est respectivement associé aux différentes zones de surveillance (74, 76).

14. Dispositif de surveillance de machine-outil selon la revendication 12 ou 13, **caractérisé en ce qu'**un mode d'avertissement de la machine-outil (10) est associé à au moins une des zones de surveillance (74).

15. Dispositif de surveillance de machine-outil selon la revendication 14, **caractérisé en ce que** l'unité de détection (24) est prévue pour interagir, dans le mode d'avertissement, avec une unité d'entraînement de machine-outil (20) en vue d'entraîner un outil (18) permettant de ralentir un entraînement d'outil.

16. Dispositif de surveillance de machine-outil selon l'une quelconque des revendications 12 à 15, **caractérisé en ce qu'**au moins la mise à l'écart d'un outil (18) entraîné, hors d'une zone de travail de la machine-outil (10), est associée à au moins une des zones de surveillance (76).

17. Dispositif de surveillance de machine-outil selon l'une quelconque des revendications 12 à 16, **caractérisé en ce qu'**au moins un circuit de sécurité de la machine-outil (10) est associé à une des zones de surveillance (76).

18. Dispositif de surveillance de machine-outil selon l'une quelconque des revendications précédentes, **caractérisé en ce que** l'unité de détection (24) comprend une unité de calcul (56) prévue pour détecter la situation d'utilisation par le biais d'une analyse basée sur une logique floue et/ou neuronale de grandeurs caractéristiques d'écartement (42, 44, 46, 82).

19. Dispositif de surveillance de machine-outil selon l'une quelconque des revendications précédentes, **caractérisé en ce que** l'unité de détection (24) comporte une banque de données (96) dans laquelle une situation d'utilisation est associée à un ensemble de grandeurs caractéristiques d'écartement (98).

20. Dispositif de surveillance de machine-outil selon l'une quelconque des revendications précédentes, **caractérisé en ce que** l'unité de détection (24) est prévue pour détecter la présence d'une partie de corps humain dans une zone de surveillance (48, 50, 52, 74, 76) à l'aide d'au moins une grandeur caractéristique d'écartement (42, 44, 46, 82, 98).

21. Dispositif de surveillance de machine-outil selon l'une quelconque des revendications précédentes, **caractérisé par** une unité actorique (81) destinée à mettre en oeuvre une mesure de sécurité et placée en liaison active avec l'unité de détection (24).

22. Procédé pour détecter une situation d'utilisation dans un processus d'utilisation d'une machine-outil (10 ; 116), **caractérisé en ce que** pour détecter un mouvement de soulèvement d'une pièce usinée (106) par rapport à un plan d'usinage de pièce usinée (104 ; 122), un ensemble de grandeurs caractéristiques d'écartement (42, 44, 46, 82, 98 ; 114.1 à 114.6), notamment une différence entre des grandeurs caractéristiques d'écartement (42, 44, 46, 82, 114.1 à 114.6), sont captés à l'aide d'une unité de détection (24) dotée d'au moins deux moyens de capteur, les moyens de capteur comportant respectivement un champ de vision et/ou un champ de captage disposé sur une surface d'usinage de machine-outil pour le positionnement d'une pièce usinée à usiner.
